(19) Europäisches Patentamt
European Patent Office
Office européen des brevets

(11) **EP 1 793 507 B1**

(12) **EUROPEAN PATENT SPECIFICATION**

(45) Date of publication and mention
of the grant of the patent:
**14.10.2009 Bulletin 2009/42**

(51) Int Cl.:
**H04B 1/707** (2006.01)

(21) Application number: **06025031.3**

(22) Date of filing: **04.12.2006**

(54) **Method and apparatus for cancelling neighbor cell interference signals in an orthogonal frequency division multiple access system**

Verfahren und Vorrichtung zur Unterdrückung von Nachbarzell-Störsignalen in einem orthogonalen Frequenzteilungs-Mehrfachzugriffssystem

Procédé et appareil permettant de supprimer les signaux d'interférence de cellules voisines dans un système d'accès multiple par répartition en fréquences sur des porteuses orthogonales

(84) Designated Contracting States:
**DE FI FR GB IT SE**

(30) Priority: **03.12.2005 KR 20050117300**
**19.12.2005 KR 20050125556**

(43) Date of publication of application:
**06.06.2007 Bulletin 2007/23**

(73) Proprietor: **Samsung Electronics Co., Ltd.**
**Suwon-si, Gyeonggi-Do (KR)**

(72) Inventors:
• **Kim, Sang-Hyo**
**Yeongtong-gu**
**Suwon-si**
**Gyeonggi-do (KR)**
• **Gu, Young-Mo**
**Yeongtong-gu**
**Suwon-si**
**Gyeonggi-do (KR)**
• **Kim, Sung-Soo**
**Yeongtong-gu**
**Suwon-si**
**Gyeonggi-do (KR)**
• **Jung, Dong-Woon**
**Yeongtong-gu**
**Suwon-si**
**Gyeonggi-do (KR)**

(74) Representative: **Lang, Johannes**
**Bardehle, Pagenberg, Dost, Altenburg, Geissler**
**Postfach 86 06 20**
**81633 München (DE)**

(56) References cited:
**EP-A- 1 249 980      EP-A- 1 318 613**
**WO-A-01/06664      WO-A-01/41387**
**US-A1- 2004 131 007**

**Description**

**BACKGROUND OF THE INVENTION**

Field of the Invention

The present invention relates generally to a method and apparatus for receiving data in a broadband wireless communication system. In particular, the present invention relates to a method and apparatus for canceling interference signals during data reception in an Orthogonal Frequency Division Multiple Access (OFDMA) communication system.

Description of the Related Art

Wireless communication systems employing a multi-carrier transmission scheme were first applied to a military radio in the late 1950s, and an Orthogonal Frequency Division Multiplexing (OFDM) scheme, which is a typical multi-carrier transmission scheme that overlaps a plurality of orthogonal sub-carriers, has been developing since the 1970s. The OFDM scheme is a scheme that converts a serial input symbol stream into parallel symbol streams and modulates the parallel symbol streams with a plurality of orthogonal sub-carriers before transmission. The OFDM scheme can be applied to such digital transmission technologies as Digital Audio Broadcasting (DAB), Digital Television, Wireless Local Area Network (WLAN), and Wireless Asynchronous Transfer Mode (ATM).

Conventionally, OFDM scheme, which is a system suitable for the wireless communication environment where Line of Sight (LOS) is not guaranteed in the multi-path environment, can provide an efficient platform for high-speed data transmission using its advantage of robustness in multi-path fading. That is, the OFDM scheme can efficiently overcome selective fading of frequency because it divides all channels into a plurality of orthogonal narrowband sub-channels before transmission.

In addition, the OFDM scheme is effective for high-speed data transmission because it can cancel inter-symbol interference (ISI) by inserting, in front of a symbol, a cyclic prefix (CP) which is longer than a delay spread of the channel. Due to these advantages, an IEEE 802.16a standard, has been established for the OFDM scheme, and the 802.16a standard supports Single-Carrier System, OFDM system, and OFDMA system.

The OFDMA is a multiple access scheme that divides a frequency domain into sub-channels each composed of a plurality of sub-carriers, divides a time domain into a plurality of time slots, and then allocates the sub-channels for individual users to thereby perform resource allocation taking both the time and frequency domains into consideration, making it possible to accommodate a plurality of users with the limited frequency resources.

Because the OFDMA system can allocate the sub-channels composed of different sub-carriers to different users, the OFDMA system can configure the sub-channels with adjacent sub-carriers if it applies an Adaptive Antenna System (AAS), which is a scheme for increasing the system capacity based on the 802.16a standard. With the use of such points, the OFDMA system allocates the best channels to the users experiencing different channel environments, thereby obtaining multi-user diversity gain.

Presently, a WiBro system, which is an IEEE 802.16-based OFDMA system, supports two modes of a frequency reuse factor=1 and a frequency reuse factor=1/3. Because the use of the frequency reuse factot=1 is high in frequency efficiency, this scheme is more advantageous in terms of the cell capacity. Therefore, the current OFDMA system basically uses the frequency reuse factor=1. The frequency reuse factor=1 is remarkably advantageous in terms of the frequency efficiency, but it is disadvantageous in that all sub-carriers in use overlap with sub-carriers of neighbor base stations (BSs), thus serving as interference to each other. That is, because the same frequency is used between neighbor cells, the signals output by the neighbor cells serve as interference signals to each other. A cell currently in communication with a terminal will be called a serving cell, and a neighbor cell causing major interference to the terminal will be called an interference cell. When the terminal is located in the boundary between the serving cell and the interference cell, only the signal coded at a very low coding rate can be normally transmitted/received, because the signals that the terminal receives from the two cells are similar to each other in power. In particular, when the terminal is experiencing a time-varying fading channel, even though a signal from the serving cell is higher in average power than an interference signal, there is a case where a power ratio of the interference signal to the serving cell signal is very high. In this case, errors cannot be corrected even with QPSK with coding rate=1/12, which is the most robust coding.

Due to the interference signals from the neighbor BSs, the terminal located in the cell boundary deteriorates in reception performance, and also deteriorates in handover performance, causing call drop.

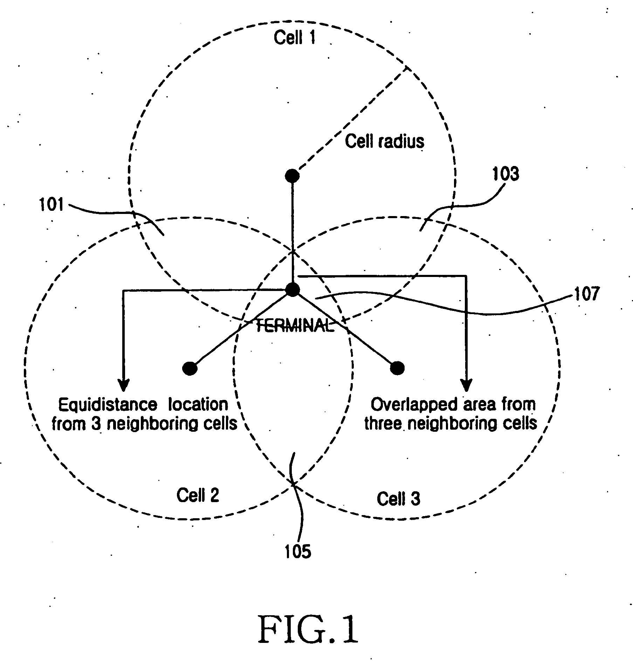

FIG. 1 is a diagram illustrating an exemplary terminal located in the region where 3 BSs overlap each other in an OFDMA system. As illustrated in FIG. 1, in order to overcome the interference problem at cell boundaries 101, 103, 105 and 107, the IEEE 802.16 standard is specified so as to modulate a BS transmission signal with low-order modulation like QPSK, apply a low forward error correction (FEC) coding rate, and use 6-repetition coding. However, in spite of the efforts, to the existing terminal receiver in the fading channel, outage probability in the cell boundary appears high and handover performance also deteriorates. In order to basically overcome such problems, it is necessary to set the frequency reuse factor to 3. In this case, however, the frequency reuse factor=3, compared with the frequency reuse factor=1, decreases to 1/3 in terms of the frequency efficiency and increases in complexity of cell planning, so it is not preferred by the service providers. For example, the frequency reuse factor is 1 even in the existing CDMA mobile communication system.

To increase reception performance of the receiver, several schemes can be considered. For example, there is a scheme for obtaining reception diversity using more than two antennas at the receiver. In this scheme, the reception performance increases by 3dB or more, even though only 2 reception antennas are used. In this case, however, complexity of the receiver considerably increases and basically, performance degradation due to the interference signals is not remarkably improved. In addition, one of the more important factor in the reception performance is to detect reception of a DL-MAP. Because the DL-MAP is a signal that is broadcasted to all terminals linked to a BS, it is difficult to improve DL-MAP reception performance even with the use of the smart antenna technology applied to individual terminals or the Multiple-In-Multiple-Out (MIMO) technology. In addition, the reception performance deterioration problem in the cell boundary causes another problem of deterioration in handover performance.

Document US 2004/0131007 A1 discloses an OFDM communication system, where pilot interference cancellation can be performed. Pilot interference is estimated and then subtracted from received symbols to obtain pilot-cancelled symbols having improved quality. The terminal typically has knowledge of the pilot transmission on a subband by a certain sector (cell). The terminal can then estimate the pilot interference from said sector in said subbands. The pilot interference estimate may be obtained by estimating the channel from said sector to the terminal for each of the subbands, generating processed pilot symbols for each subbands in the same manner as performed by said sector and scaling these processed pilot symbols with the channel estimate. The pilot interference estimate for each subband for said sector is then subtracted from the received symbols for the same subband to obtain the pilot-cancelled symbols for that subband.

Document WO 01/06664 A2 relates to methods for reducing multiple access interference in a CDMA system through successive interference cancellation techniques. An estimate of reliability of cancellation of a strongest interfering signal is formed from analysis of a pilot signal associated with the strongest signal. The estimate is used to derive a weight that is multiplied by a replica of the strongest signal to provide a weighted replica. The weighted replica may be combined with the received signal to subtract contributions of the strongest received signal from the total received signal. The process then may be iterated to sequentially remove progressively weaker received signals until the desired signal is received and decoded without interference from the stronger signals.

Document WO 01/41387 A1 relates to an interference signal cancelling method in a multicarrier communication system. The receiver comprises a plurality of interference cancellers each of which is associated to a respective one of a sub-carrier signals for cancelling only co-channel interference. The transmitted symbol sequence can be simultaneously estimated both for the desired and the interference signals. Based on this candidates, an error signal is determined, by subtracting the estimated desired and interference signals from a received sub-carrier signal. The receiver determines transmitted signal symbol sequence both of desired and the interference signal with the error signal by using a maximum likelihood estimation device. Thus, the receiver can easily be extended to a multi-user receiver by outputting the estimated symbol sequence not only of the desired signal but also of the interference signals.

**SUMMARY OF THE INVENTION**

The present invention is defined by a method according to claim 1 and a corresponding apparatus according to claim 7. Further embodiments are defined by the dependent claims.

An aspect of certain exemplary embodiments of the present invention is to address at least the above problems and/or disadvantages and to provide at least the exemplary advantages described below. Accordingly, an aspect of exemplary embodiments of the present invention is to provide a method for increasing reception performance by canceling interference signals in an OFDMA system, and a receiver using the same.

Another aspect of certain exemplary embodiments of the present invention is to provide an interference signal cancellation method for improving handover performance by canceling interference signals in an OFDMA system, and a receiver using the same.

Further another aspect of certain exemplary embodiments of the present invention is to provide an interference signal cancellation method for improving decoding performance even after canceling interference signals in an OFDMA system, and a receiver using the same.

According to still another exemplary embodiment of aspect of the present invention, there is provided a method for canceling a neighbor cell interference signal upon receiving a signal transmitted from a serving base station (BS) in an Orthogonal Frequency Division Multiple Access (OFDMA) system. The method includes scanning neighbor BSs from which interference signals are received, measuring a Carrier to Interference plus Noise Ratio (CINR) of the interference signals received from the neighbor BSs, determining the highest CINR among the measured CINRs which are higher than a predetermined threshold; regenerating an interference signal having the highest CINR, and subtracting the regenerated interference signal from the received signal.

According to still another exemplary embodiment of aspect of the present invention, there is provided an apparatus for canceling a neighbor cell interference signal in a receiver for receiving a signal transmitted from a serving base station (BS) in an Orthogonal Frequency Division Multiple Access (OFDMA) system. The apparatus includes a controller including scanning neighbor BSs from which interference signals are received; measuring a Carrier to Interference plus Noise Ratio (CINR) of the interference signals received from the neighbor BSs, and determining the highest CINR among the measured CINRs which are higher than a predetermined threshold, an interference canceller for regenerating an interference signal having the highest CINR under the control of the controller, and a subtractor for subtracting the regenerated interference signal from the received signal.

## BRIEF DESCRIPTION OF THE DRAWINGS

The above and other objects, features and advantages of the present invention will become more apparent from the following detailed description when taken in conjunction with the accompanying drawings in which:

FIG. 1 is a diagram illustrating an exemplary terminal located in the region where 3 BSs overlap each other in an OFDMA system;
FIG. 2 is a block diagram of a transmitter in a general OFDMA system;
FIG. 3 is a block diagram of a receiver in a general OFDMA system;
FIG. 4 is a diagram illustrating an exemplary frame structure of an OFDMA system using a Time Division Duplexing (TDD) scheme;
FIG. 5 is a flowchart illustrating a signal processing process for DL burst decoding in an OFDMA receiver;
FIG. 6 is a block diagram of a receiver including a repetitive interference canceller for canceling an interference signal in an OFDMA system according to an exemplary embodiment of the present invention;
FIG. 7 is a block diagram illustrating a receiver in an OFDMA system according to an exemplary embodiment of the present invention;
FIG. 8 is a diagram illustrating QPSK, 16QAM and 64QAM constellations;
FIG. 9 is a block diagram of an apparatus for normalizing an input metric to a channel decoder in an OFDMA receiver including a repetitive interference canceller according to an exemplary embodiment of the present invention;
FIG. 10 is a block diagram of an apparatus for normalizing an input metric to a channel decoder in an OFDMA receiver including a repetitive interference canceller according to an exemplary embodiment of the present invention;
FIG. 11 is a block diagram of an apparatus for normalizing an input metric to a channel decoder in an OFDMA receiver including a repetitive interference canceller according to an exemplary embodiment of the present invention;
FIG. 12 is a block diagram of an apparatus for normalizing an input metric to a channel decoder in an OFDMA receiver including a repetitive interference canceller according to an exemplary embodiment of the present invention;
FIG. 13 is a block diagram of an apparatus for normalizing an input metric to a channel decoder in an OFDMA receiver including a repetitive interference canceller according to an exemplary embodiment of the present invention;
FIG. 14 is a block diagram of an apparatus for normalizing an input metric to a channel decoder in an OFDMA receiver including a repetitive interference canceller according to an exemplary embodiment of the present invention;
FIG. 15 is a block diagram of an apparatus for normalizing an input metric to a channel decoder in an OFDMA receiver including a slicer method-based interference canceller according to an exemplary embodiment of the present invention;
FIG. 16 is a flowchart illustrating a method for normalizing an input metric to a channel decoder in a receiver including an interference canceller based on a channel decoding feedback method according to an exemplary embodiment of the present invention; and
FIG. 17 is a flowchart illustrating a method for normalizing an input metric to a channel decoder in a receiver including an interference canceller based on a slicer method according to an exemplary embodiment of the present invention.

## DETAILED DESCRIPTION OF EXEMPLARY EMBODIMENTS

Exemplary embodiments of the present invention will now be described in detail with reference to the annexed drawings. In the drawings, the same or similar elements are denoted by the same reference numerals throughout the drawings. In the following description, a detailed description of known functions and configurations incorporated herein has been omitted for clarity and conciseness.

An exemplary embodiment of the present invention proposes a method and apparatus for canceling interference signals to improve reception performance in a receiver of an OFDMA system. The interference signal cancellation method and apparatus proposed in certain exemplary embodiments of the present invention can be applied to both of the synchronous system and the asynchronous system. For a better understanding of the present invention, the OFDMA system will first be described before a description of the method and apparatus according to exemplary embodiments of the present invention is given.

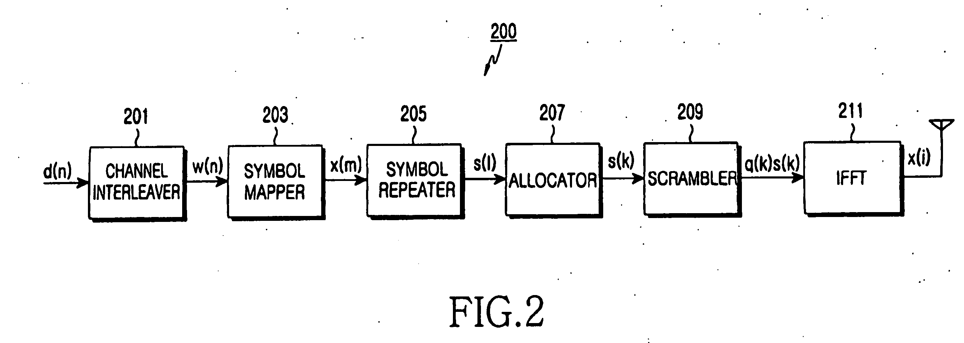

FIG. 2 is a block diagram of a transmitter 200 in a general OFDMA system.

Referring to FIG. 2, a channel encoder (for example, an interleaver) 201, like a forward error correction (FEC) encoder, channel-encodes transmission data d(n) including control information and generates a sequence w(n) composed of codewords. Thereafter, a symbol mapper 203 performs mapping with a preset modulation method, and outputs a QAM symbol x(m) such as Quadrature Phase Shift Keying (QPSK), 16-ary Quadrature Amplitude Modulation (16QAM), and 64QAM symbols. A symbol repeater 205 performs repetition according to the number of repetitions (hereinafter referred to as "repetition number") set by a BS for robust communication. A signal s(1) symbol-repeated by the symbol repeater 205 is converted into a rearranged signal s(k) through an allocator 207. The symbol-repeated signal s(1) includes not only the rearranged coded symbol s(k) but also a pilot symbol for synchronization and channel estimation of a receiver. A scrambler 209 multiplies the s(k) by a scrambling sequence q(k) applied to each BS. An Inverse Fast Fourier Transformer (IFFT) 211 converts a received signal q(k)s(k) into a time-domain signal X(i), and transmits the time-domain signal X(i) via an antenna.

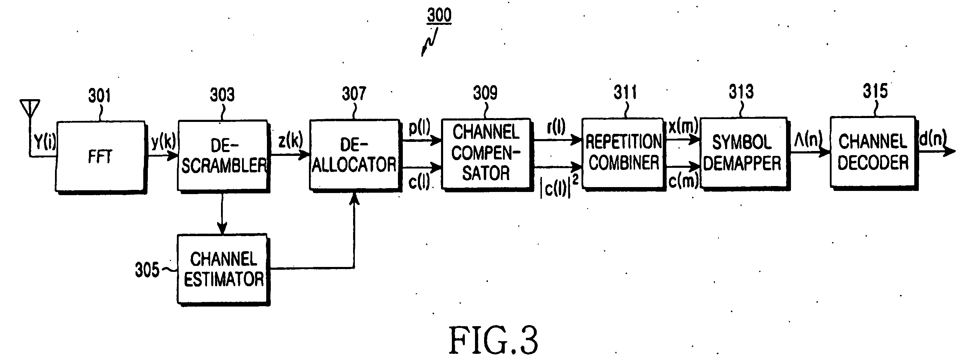

FIG. 3 is a block diagram of a receiver 300 in a general OFDMA system.

Referring to FIG. 3, a signal Y(i) received via an antenna is converted into a frequency-domain signal sequence y(k) by a Fast Fourier Transformer (FFT) 301. The y(k) is descrambled into a complex conjugate pair q(k)* of the scrambling sequence q(k) by a descrambler 303, outputting frequency-domain data z(k). A channel estimator 305 performs channel estimation using pilot sub-carriers in the descrambled frequency-domain signal z(k). The channel estimator 305 uses a pilot in a preamble and a pilot in a data region in the channel estimation process. Thereafter, a deallocator 307 deallocates estimated channel value and data according to allocation information of control information previously known by a terminal, or allocation information given in a DL-MAP.

In the deallocator 307, rearrangement of data is achieved in the allocation process specified in the transmitter 200. The data deallocated by the deallocator 307 is expressed as p(1), and the p(1) is a signal obtained by multiplying the signal carried on each sub-carrier by a channel response. The deallocator 307, in the process of deallocating the p(1), deallocates a channel-estimated value c(1) corresponding thereto. A channel compensator 309 outputs the QAM symbol finally channel-compensated by Equation (1).

$$r(l) = p(l) \times c(l)^{\bullet} \quad \dots\dots\dots (1)$$

The QAM symbol, which is a compensated signal r(1) obtained using Equation (1), is input to a repetition combiner 311. If 1, 2, 4 and 6 repetitions are applied in a coding and modulation process, the repetition combiner 311 combines the repeated symbols as many times as the repetition number, thereby obtaining the combined result of the x(m) and the channel response coefficient. A symbol demapper 313 obtains, from an input, an input metric A(n) corresponding to each bit necessary for channel decoding. Herein, positions of the repetition combiner 311 and the symbol demapper 313 are replaceable, and the exemplary structure of the present invention covers the possible replacement. A channel decoder 315, like an FEC decoder, decodes the obtained input metric, and outputs the decoded data d(n).

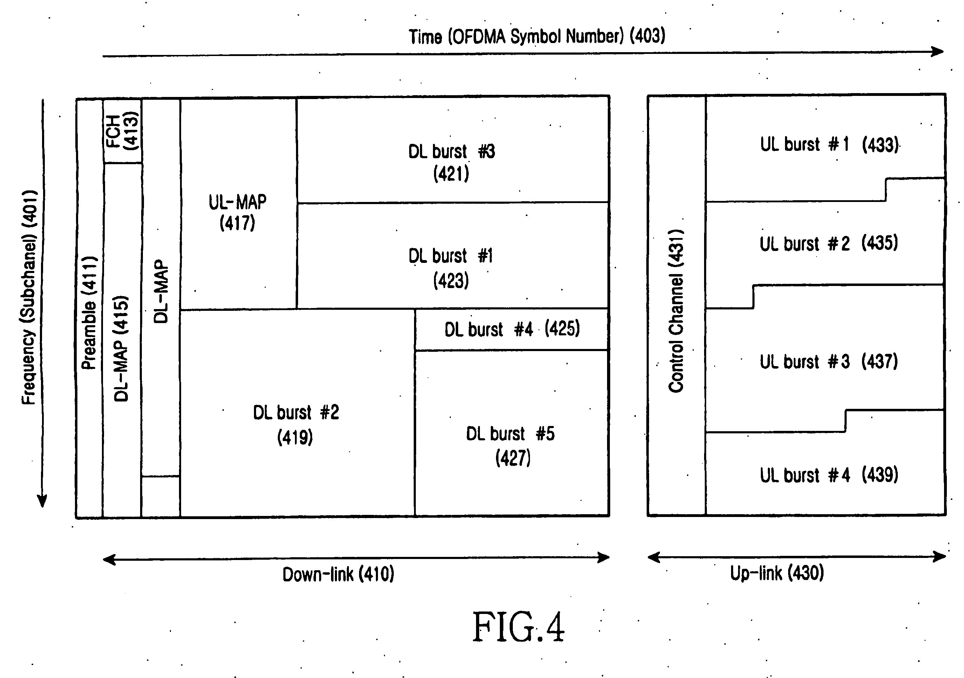

FIG. 4 is a diagram illustrating an exemplary frame structure of an OFDMA system using a Time Division Duplexing (TDD) scheme.

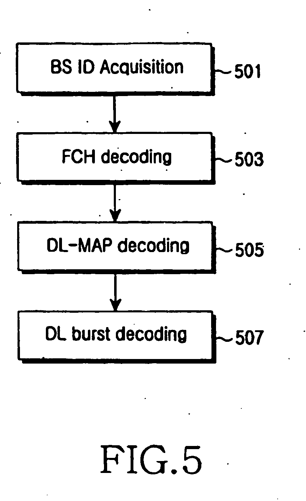

Referring to FIG. 4, in the frame, a vertical axis 401 represents a frequency band of sub-carriers, and a horizontal axis 403 represents OFDM symbols, or a time axis. In the frame, as illustrated, a downlink (DL) interval 410 and an uplink (UL) interval 430 are divided in the time axis. The uplink frame 430 includes, for example, a control channel 431, and UL burst 433, 435, 437 and 439. A first symbol of the downlink frame is a preamble 411. A terminal uses the preamble 411 for synchronization acquisition, BS ID acquisition, and channel estimation. 113 BS IDs used for identifying BSs are specified in IEEE 802.16e, and because they are used as seed values for scrambling and sub-carrier permutation, the BS ID acquisition is necessarily needed for decoding DL data bursts 419, 421, 423, 425 and 427. The preamble 411 is followed by a frame control header (FCH) 413, and the FCH 413 includes information necessary for decoding a DL-MAP 415. That is, the FCH 413 contains information on a DL-MAP length and a coding method of the DL-MAP. The DL-MAP 415 contains therein the information necessary for decoding DL data bursts in this frame. In other words, the DL-MAP 415 includes position and size information of each individual burst, and Modulation and Coding Scheme (MCS) information. Therefore, in order to decode the DL data bursts 417, 419, 421, 423 and 425, the signals are processed as shown in FIG. 5.

FIG. 5 is a flowchart illustrating a signal processing process for DL burst decoding in an OFDMA receiver. As illustrated in FIG. 5, the receiver acquires a BS ID based on a preamble in step 501, and decodes an FCH corresponding to the acquired BS ID in step 503. Thereafter, the receiver decodes the corresponding DL-MAP using DL-MAP decoding information in the received FCH in step 505. The receiver detects positions of DL bursts 417, 419, 421, 423 and 425 from the DL-MAP, and decodes the DL bursts in step 507.

In order to cancel the interference signal, the OFDMA system requires a series of signal processing processes of correctly estimating and detecting an interference signal, regenerating a signal by converting the detected interference signal into the form of a transmission signal, and subtracting the regenerated signal from the received signal.

This interference signal cancellation scheme is most suitable for the DL-MAP 415. The DL-MAP 415 suffers considerable inter-BS interference because it is received at the same position from all BSs, thereby causing deterioration of the handover performance. The core of the interference signal cancellation technique is to correctly detect an interference signal. Because the DL-MAP 415 is generally QPSK-modulated and uses a high repetition coding rate, it is easy to correctly detect an interference signal from the DL-MAP 415. In addition, because the DL-MAP 415 immediately follows a preamble 411, which is less affected by the interference signal in the time axis, it is also easy to perform channel estimation on the interference signal using the preamble signal.

A description will now be made of an interference signal cancellation technique capable of improving reception performance of a receiver by efficiently canceling interference signals according to an embodiment of the present invention. In brief, the interference signal cancellation method according to the present invention is characterized by receiving a signal transmitted from a transmitter, regenerating an interference signal after detecting the interference signal from the received signal, and canceling the regenerated interference signal from the reception signal.

A description will now be made of a structure of a receiver to which the interference signal cancellation method according to the present invention is applied, and of an exemplary signal processing process for interference signal cancellation.

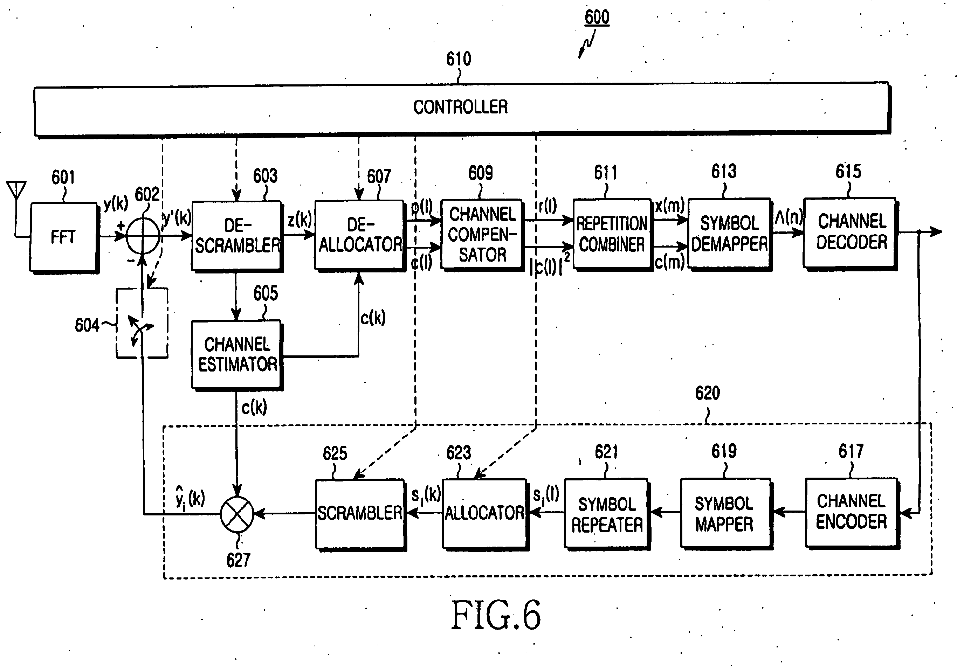

FIG. 6 is a block diagram of a receiver including a repetitive interference canceller 620 for canceling an interference signal in an OFDMA system according to an exemplary implementation of an embodiment of the present invention. A receiver 600 according to an exemplary embodiment of the present invention generates an interference signal for a received signal by channel coding, and subtracting the interference signal from the received signal in the frequency domain, thereby improving reception performance. In the following description, a method for decoding even the DL bursts of the generated interference signal will be referred to as a channel decoding feedback method, this reference is made simply for convenience of explanation and does not in any way limit the scope or applicability of the present invention.

Referring to FIG. 6, the receiver 600 according to an exemplary embodiment of the present invention includes a controller 610 for controlling each of function blocks to use feedback of the channel decoding result, and an interference canceller 620 for regenerating an interference signal using feedback of the channel decoding result.

A description of the receiver 600 in FIG. 6 will be focused on the controller 610 and the interference canceller 620 that regenerates an interference signal using feedback of the channel decoding result, because the process of receiving signals from a BS in service (or serving cell) has been described above.

The receiver 600 includes the interference canceller 620 for regenerating a received interference signal, a subtractor 602 for subtracting the signal regenerated by the interference canceller 620 from the signal of the serving BS, a switch 604 for switching the subtraction, and the controller 610 for controlling whether to use the regenerated signal from the interference canceller 620 and also controlling each of function blocks, in addition to the general reception blocks. In an exemplary implementation, regenerating an interference signal is equivalent to generating the same signal as the signal output from the transmitter that transmits the interference signal.

A detailed description of the receiver 600 will be made herein below. In order to detect an interference signal, the controller 610 first detects an interference signal using an ID of a neighbor BS that generates interference. In an exemplary implementation, the interference signal is detected by a CINR measurer (not shown). If interference signals of the neighbor BSs, measured by the CINR measurer, satisfy a specific condition, the controller 610 controls the interference canceller 620 and the switch 604 to thereby control reception of interference signal of an interfering BS. The method for detecting the interference signal is equal to the method used by the OFDMA receiver described in FIG. 3. That is, the received signal is detected through a descrambler 603, a deallocator 607, a channel compensator 609, a repetition combiner 611, a symbol demapper 613, and a channel decoder 615. Although the receiver 600 uses herein the CINR to detect an interference signal, it can also detect the interference signal by measuring strength of a signal received in another method, for example by measuring strength of a pilot signal. In this case, the controller 610 may include a pilot strength measurer (not shown).

The interference canceller 620 regenerates the interference signal transmitted over a channel, using the interference signal detected by the receiver. Herein, generating the interference signal means equally generating the signal generated by the BS that transmitted the interference signal, in order to cancel the interference signal at the receiver.

A process of regenerating the interference signal follows the process used in the OFDMA transmitter described in FIG. 2. Accordingly, the interference canceller 620 includes a channel encoder 617, a symbol mapper 619, a symbol repeater 621, an allocator 623, a scrambler 625, and a multiplier 627. That is, a method for generating the interference signal includes, for example, channel encoding, symbol mapping, repetition coding, allocating, and scrambling processes.

The multiplier 627 multiplies the channel-estimated result of a channel estimator 605 by the generated interference signal. In this way, the receiver 600 can obtain the interference signal received over the channel. Finally, the receiver 600 subtracts the regenerated interference signal from the received signal, thereby obtaining the pure signal from which the interference signal is canceled. The receiver 600 according to an exemplary implementation the present invention can detect its own signal with a BS ID of a serving cell in the existing OFDMA reception method, using the interference-canceled reception signal. The controller 610 controls such a signal flow. For example, the controller 610 provides a BS ID of the interference signal to the scrambler 625, the descrambler 603, the deallocator 607 and the allocator 623 in the process of detecting or regenerating the interference signal, and provides a BS ID of its serving BS to the above blocks in the process of detecting its own signal.

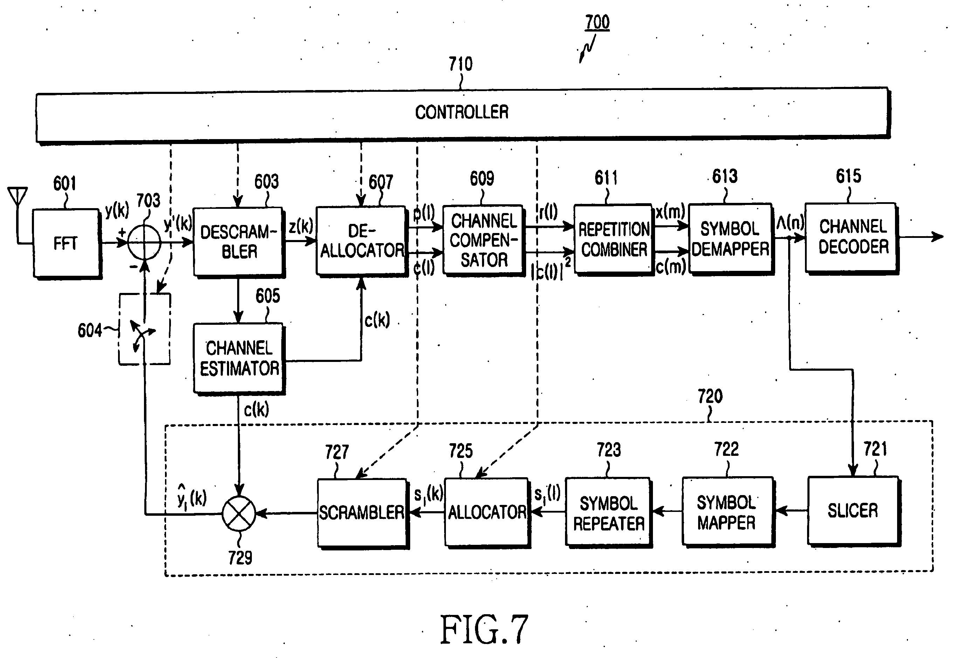

FIG. 7 is a block diagram illustrating a receiver 700 in an OFDMA system according to an exemplary embodiment of the present invention. Although the receiver 600 of FIG. 6 can detect a correct interference signal through channel coding, the channel encoder 617 is greater than other blocks in terms of the latency and complexity. Therefore, in order to cancel the interference signal, the latency and complexity increases considerably. However, the receiver 700 of FIG. 7, although it may be slightly lower in performance than the receiver 600 of FIG. 6, can reduce the latency and complexity..

Referring to FIG. 7, the receiver 700 includes an interference canceller 720 for regenerating a received interference signal, a subtractor 703 for subtracting the regenerated signal from the interference canceller 720 from the signal of the serving BS, a switch 604 for switching the subtraction, and a controller 710 for controlling whether to use the regenerated interference signal from the interference canceller 720 and also controlling each of function blocks, in addition to the general reception blocks.

The interference canceller 720 in the receiver 700, unlike the channel decoding feedback method, does not include the channel encoder 617, and includes a slicer 721, a symbol mapper 722, a symbol repeater 723, an allocator 725, a scrambler 727, and a multiplier 729. The slicer 721 performs a series of processes such as symbol mapping, using the signal output from a symbol demapper 613. That is, the slicer 721 performs hard decision on the metric output from the symbol demapper 613, and outputs the hard decision result back to the symbol mapper 722, thereby generating a signal in a method different from the channel decoding feedback method. In FIG. 7, although the slicer 721 is connected to a chain between the symbol demapper 613 and the symbol mapper 722, it can also be connected between the output of a repetition combiner 611 and the symbol repeater 723. In this case, because the output of the repetition combiner 611 does not undergo the mapping and demapping processes, the receiver 700 can cancel the interference signal at higher speed.

Because the interference canceller 720 regenerates an interference signal using the received signal, it does not perform Log Likelihood Ratio (LLR) calculation and channel encoding. For example, the interference canceller 720 regenerates an interference signal using the symbol-demapped signal. For a more reliable delivery of more important information such as control information, the communication system may achieve a low valid coding rate using a combination of channel coding and repetition coding. According to an exemplary implementation, this method is a technique of regenerating an interference signal using only the symbol combining corresponding to the repetition coding.

According to an exemplary implementation, this method may lose out on a CINR gain as it does not perform channel decoding, but it can reduce the latency and complexity. In the following description, an exemplary implementation of this method will be referred to as a slicer method.

Of the foregoing exemplary methods, the channel decoding feedback method is more complex, but shows better performance in the interference signal cancellation process. The repetitive interference signal cancellation apparatus and method performs decoding on the interference signal using the phenomenon where decoding is performed successfully even though the amount of the interference signal is large to some extent in the case where the signals transmitted by the interference cell and the serving cell are located in the same position in the time and frequency domains, or in the case where a low coding rate is set for low-order modulation, and then cancels the interference signal. The interference signal cancellation method can show acceptable performance when it uses robust modulation/coding with low modulation order and low coding rate. Generally, because the robust modulation/decoding with low modulation order and low coding rate is applied to the FCH 413 and the DL-MAP 415 of FIG. 4, the FCH 413 and the DL-MAP 415 can be advantageous for interference signal cancellation.

Although the interference cancellers 620 and 720 of FIGs. 6 and 7 generate signals, they can also be used for regenerating and canceling pilot signals in a data region, and using channel-estimated value of a preamble for interference signal cancellation. In addition, the controllers 610 and 710 of FIGS. 6 and 7, after completely canceling the interference signals, can use the pilot signal in the preamble and the pilot signal in the data region for channel estimation.

The FCH 413 and the DL-MAP 415 of FIG. 4, to which coding of convolutional code and turbo code is applied at QPSK with coding rate 1/2, can be repeated 8 or 6 times, having valid coding rates of 1/16 and 1/12. FIG. 6 shows a repetitive interference signal cancellation apparatus using such a channel decoder.

A detailed description will now be made of the interference cancellation technique using an exemplary implementation of the channel decoding feedback method among the foregoing interference cancellation techniques.

In FIG. 6, the received signal output from an FFT 601 can be modeled as Equation (2).

$$y(k) = c_0(k)q_0(k)s_0(k) + c_1(k)q_1(k)s_1(k) + c_2(k)q_2(k)s_2(k) + n(k) + I(k)$$

$$\cdots\cdots\cdots$$

(2)

In Equation (2), $s_0(k)$ denotes a signal before scrambling by a serving cell, and $c_0(k)$ denotes a channel that $s_0(k)$ experiences. The $s_0(k)$ means a signal received from a cell with segment ID=0, and a serving sector of a serving cell does not lose generality even though the segment ID is assumed to be 0. The segment ID is provided to distinguish sub-carriers used for a preamble without overlapping positions thereof, and the IEEE 802.16e standard defines a total of 3 segment IDs. The above-stated 113 BS IDs can be sub-classified into 3 groups for each individual segment ID. The BS IDs and the segment IDs used in certain exemplary embodiments of the present invention are all defined in the IEEE 802.16e standard.

According to exemplary embodiments of the present invention, a cell with segment ID=0 is assumed as a serving cell and $s_0(k)$ is assumed as a frequency-domain signal before scrambling, transmitted by the serving cell. Equation (2) shows an exemplary case in which a signal received at a receiver is modeled after being divided into a signal of a serving cell, an interference-cancelable signal, an interference-noncancelable signal, and an interference signal. In this case, there are two interference-cancelable signals.

$S_1(k)$ denotes an interference signal received from a cell with segment ID=1, and $S_2(k)$ denotes a signal received from an interference cell with segment ID=2. In addition, $c_1(k)$ and $c_2(k)$ denote the channels that the interference signals experience before they are received at the receiver.

The interference signals received from the cell with segment ID=1 are denoted by $c_1(k)q_1(k)s_1(k)$, and the interference signals received from a cell with segment ID=2 are denoted by $c_2(k)q_2(k)s_2(k)$.

Therefore, in exemplary embodiments of the present invention, $c_1(k)q_1(k)s_1(k)$ and $c_2(k)q_2(k)s_2(k)$ are the interference signals desired to be canceled. Further, $n(k)$ denotes a noise, and $I(k)$ is a sum of the interference signals which are not included in the interference cancellation target, or for which interference cancellation is impossible.

Generally, a criterion for including interference signals received at the receiver in the interference cancellation target can be a level of a Carrier to Interference plus Noise Ratio (CINR) of each interference signal. The foregoing cancelable interference signal generally has a preamble ID distinguishable from the serving cell, and is limited to the interference signals having a CNIR which is higher than or equal to a threshold. Although an exemplary embodiment of the present invention presents a method for canceling interference signals by measuring a level of the CINR, it can also cancel the interference signals based on strength of the signals received from the serving cell and the neighbor cell, instead of the CINR. However, in the following exemplary embodiments of the present invention, a method for performing interference cancellation using the CINR will be described.

The reason why an exemplary embodiment of the present invention is described for the case where the CINR is higher than or equal to a threshold is because when the interference cancellation is attempted on the interference signal, whose CINR is lower than the threshold, it may be difficult to correctly regenerate the interference signal, causing performance degradation. According to exemplary embodiments of the present invention $c_1(k)q_1(k)s_1(k)$ and $c_2(k)q_2(k)$ $s_2(k)$ are defined as an interference cancellation target, and $c_2(k)q_2(k)s_2(k)$ is canceled after canceling $c_1(k)q_1(k)s_1(k)$, by way of example.

A final signal that may be obtained from the received signal of Equation (2) by interference cancellation is given as Equation (3).

$$y'(k) = c_0(k)q_0(k)s_0(k) + n(k) + I(k) \qquad \cdots\cdots\cdots (3)$$

For example, the interference signals $i_1(k)=c_1(k)q_1(k)s_1(k)$ and $i_2(k)=c_2(k)q_2(k)s_2(k)$ will be canceled from Equation (2) through interference cancellation.

An OFDMA receiver 600 according to an exemplary implementation of an embodiment of the present invention assumes $S_1(k)$ as a signal to be decoded, and performs a general reception operation. Then, the receiver 600 estimates $c_1(k)$ by a channel estimator 605, regenerates $i_1(k)$ by decoding and symbol mapping, and subtracts $i_1(k)$ from $y(k)$ by a subtractor 602, thereby canceling the interference signal from a cell with segment ID=1 from $y(k)$.

Similarly, in order to cancel the interference signal from a cell with segment ID=2, the receiver 600 regenerates $i_2(k)$ and cancels the interference signal from the $i_1(k)$-canceled signal. A more ideal form of the final signal obtained through this process is given as Equation (4).

$$y'(k) = c_0(k)q_0(k)s_0(k) + n(k) + I(k) \quad \ldots\ldots\ldots (4)$$

Because $i_1(k)$ and $i_2(k)$ may not be perfectly regenerated, the finally obtained signal is expressed as Equation (5).

$$y'(k) = c_0(k)q_0(k)s_0(k) + i_1(k)i_2(k) + n(k) + I(k) - \hat{i}_1(k) - \hat{i}_2(k) \quad \ldots\ldots\ldots$$

$$\ldots (5)$$

After the interference cancellation process, the interference cancellation receiver decodes the data transmitted from the serving cell through the final decoding process. In Equation (5), $\hat{i}_1(k)$ denotes an approximation of $i_1(k)$, and $\hat{i}_2$ ($k$) denotes an approximation of $i_2(k)$.

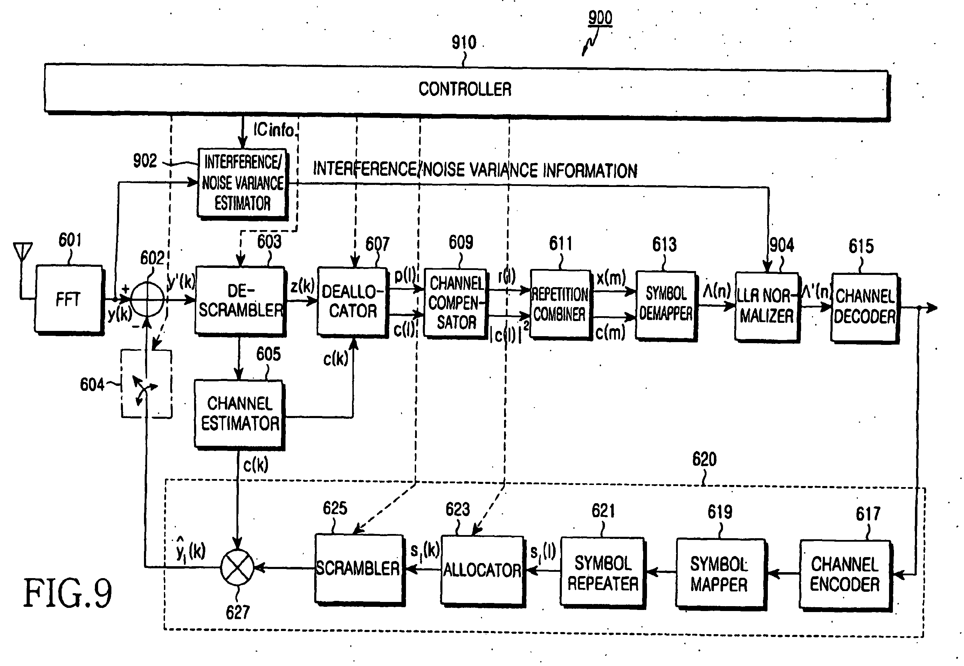

In the receiver of the OFDM/OFDMA system, a signal channel-compensated by a channel compensator 609 is generated as an input metric to a channel decoder 615 by a symbol demapper 613. In the metric generation process, there is a need for appropriate normalization to show optimal performance at the channel decoder 615. This process will be described in detail with reference to FIGs. 9 to 17, and frequency-domain data p(1) can be expressed as Equation (6).

$$p(l) = c(l)s(l) + n_{xl} + j \cdot n_{yl} = c_l(a_l + j \cdot b_l) + n_{yl} + j \cdot n_{yl} = A_l + jB_l + n_{xl} + j \cdot n_{yl}$$

$$\ldots\ldots\ldots$$

$$(6)$$

The data p(1), which is the data that has passed through a channel with channel response=c(1), can be considered as the data obtained after performing descrambling and deallocation on the frequency domain of the actually received data. For example, p(1) is multiplied by a channel response c(1), appearing in the form in which a noise signal is added. For example, $n_{xl}$ and $n_{yl}$ denote channels including interference signals. The c(1)s(1) can be expressed as a complex number $A_1 + jB_1$. Here, the s(1) can be obtained by m-bit QAM modulation in accordance with Equation (7).

$$u_{l,m-1}, u_{l,m-2}, \cdots, u_{l,0} \xrightarrow{\; M-QAM \;} a_l, b_l \quad \ldots\ldots\ldots (7)$$

Equation (7) indicates that information bits are mapped to a QAM symbol. One QAM symbol is generated with m bits. In IEEE 802.16, m is 2 for QPSK, 4 for 16QAM, and 6 for 64QAM.

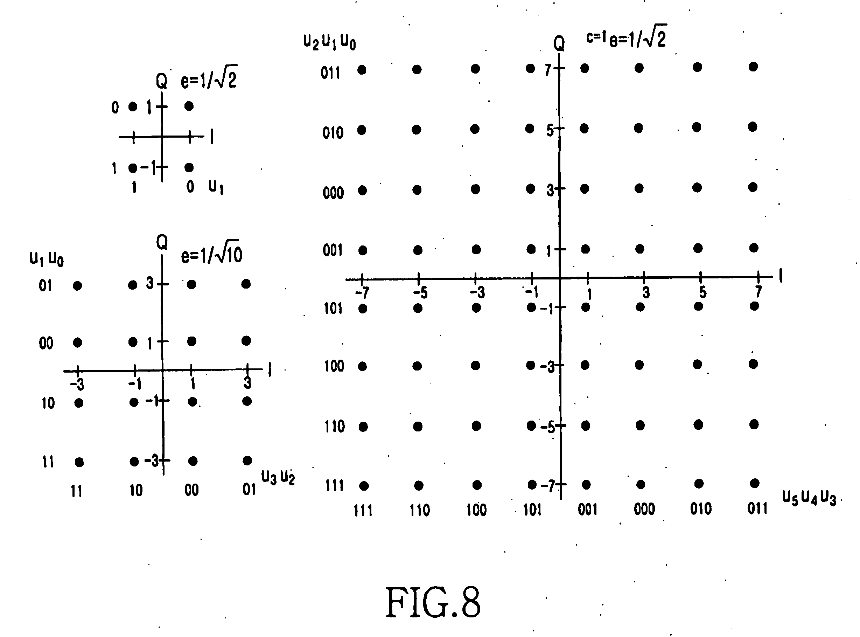

FIG. 8 is a diagram illustrating QPSK, 16QAM and 64QAM constellations. A relationship between input information bits and output symbols can be understood from FIG. 8.

For channel decoding, a communication system using QAM modulation calculates metrics including reliabilities of the bits constituting a codeword, using a received QAM symbol p(1) and a channel response c(1). Generally, the reliability can be expressed as an LLR. An LLR for the bits $u_{1,i}$ constituting the received QAM symbol p(1) is defined as Equation (8).

$$\Lambda(u_{l,i}) = \log \frac{\Pr\{u_{l,i} = 0 \mid A_l, B_l\}}{\Pr\{u_{l,i} = 1 \mid A_l, B_l\}}$$

$$= \log \frac{\sum_{z_l} \exp\left\{\frac{-1}{\sigma_n^2} \left| c(l)s(l) - z_l(u_{l,i} = 0) \right|^2\right\}}{\sum_{z_l} \exp\left\{\frac{-1}{\sigma_n^2} \left| c(l)s(l) - z_l(u_{l,i} = 1) \right|^2\right\}}$$ $$\cdots\cdots\cdots (8)$$

$$= \frac{-1}{\sigma_n^2} \log \frac{\sum_{z_l} \exp\left\{ \left| c(l)s(l) - z_l(u_{l,i} = 0) \right|^2\right\}}{\sum_{z_l} \exp\left\{ \left| c(l)s(l) - z_l(u_{l,i} = 1) \right|^2\right\}}$$

$$= \frac{1}{\sigma_n^2} L(-u_{l,i})$$

In Equation (8), $\sigma_n^2$ denotes a variance of interference and noise signals, and it is generated by an interference/noise variance estimator 902 and then output to an LLR normalizer 904. Therefore, the LLR normalizer 904 requires a value $\sigma_n^2$ or its corresponding processed value for calculation of an appropriate LLR value to be used as an input of a channel decoder 615. In calculation of the LLR, $L(-u_{1,i})$ excluding $\frac{1}{\sigma_n^2}$ corresponding to normalization can be calculated in various methods. For example, an approximation of the LLR value can be obtained with the very simple linear calculation, using a dual minimum metric technique disclosed in the paper of Y. Xu, H.-J. Su, E. Geraniotis, "Pilot symbol assisted QAM with interleaved filtering and turbo decoding over Rayleigh flat-fading channel," in Proc. MICOM '99, pp. 86-91, the entire disclosure of which is hereby incorporated by reference.

Decoding is performed using the obtained LLR by the channel decoder 615. In performing fixed point calculation, in order to prevent performance degradation, normalization corresponding to $\frac{1}{\sigma_n^2}$ can be performed to obtain the optimal channel decoding performance and to minimize hardware complexity. For the normalization, there may be a need for an interference/noise variance $\sigma_n^2$ for the signal to be decoded in the channel decoder 615, or its corresponding normalization parameter. By performing normalization using the parameter, it is possible to increase the efficiency in implementing a receiver with an interference canceller 620. Normalization corresponding to $\frac{1}{\sigma_n^2}$ (that is, process of

multiplying $\frac{1}{\sigma_n^2}$ when calculating the metric in according with Equation (8)) can be applied to bit metrics output after the calculation of $L(-u_{1,i})$, dual minimum metric technique, or demapping is performed. Alternatively, the normalization can also be applied before the calculation of $L(-u_{1,i})$, dual minimum metric technique, or demapping is performed. Exemplary embodiments of the present invention may include various normalization methods using $\sigma_n^2$ or its corresponding information in any process that should be performed after deallocation.

According to exemplary embodiments of the present invention, a normalizer performs normalization on the metric to be input to the channel decoder 615 by multiplying the metric output from a symbol demapper 613 by $\frac{1}{\sigma_n^2}$.

For example, in Equation (8), the normalizer performs normalization by multiplying $L(-u_{1,i})$ by a reciprocal of $\sigma_n^2$ received from an interference/noise variance estimator 1002.

An OFDMA receiver including the interference cancellers 620 and 720 described in FIGs. 6 and 7 can improve reception performance of the terminal in the case where inter-cell interference is considerable. In the case where the interference cancellation technique using the channel decoding feedback method described in FIG. 6 is applied to the terminal and a general automatic gain control (AGC) loop is operated, the AGC loop can control a gain according to the sum of a level of a self signal and a level of an interference signal.

In an exemplary implementation of the present invention, if the interference signals are sufficiently lower in strength than the signal received from the serving BS, performance degradation may occur in a decoding process of a first interference signal, because normalization of a channel decoding input is inappropriate in the decoding process of the first interference signal. The reason is as follows. There is a need for appropriate normalization, in order for a value of an input metric to show the optimal performance in a channel decoding process where fixed point calculation is performed. However, there is a possible case where a level of the first interference signal exceeds a general operation range given by an interworking process of an AGC loop, a channel compensator 609, a repetition combiner 611, and a symbol demapper 613.

The AGC loop performs an operation in which while the receiver performs signal processing, an expression range of the values process in the receiver should appropriately fall within an expression range provided by hardware. However, when the interference signals are sufficiently lower in strength than the signal received from the serving BS, the AGC loop will be appropriately set according to the signal received from the serving BS. Therefore, the interference signals are expressed with much lower values, and as a result, if channel compensation and symbol demapping are performed thereon, a value of the input metric to the channel decoder 615 is expressed with a value much lower than an appropriate expression range, causing deterioration of channel decoding performance.

For example, it will be assumed that input metrics of the channel decoder 615 can express a range of 127 to -127, and an average of the metrics should be about 32, in order for the channel decoder 615 to show sufficient performance. If an input average is 5 because the interference signal is a value much lower in strength than the signal received from the serving BS, only the much smaller range is expressed even though the actual expression range is 127 to -127. As a result, performance degradation may occur in actual channel decoding.

In this example, reliability of the feedback value will decrease, and in the interference cancellation process, error propagation may occur, thereby causing performance degradation of the overall interference cancellation technique. That is, when the signal from which the interference is to be canceled is not normally decoded, a difference between the original interference signal and the estimated interference signal is large. In this case, many errors occur even when the signal received from the serving BS is decoded.

In an exemplary implementation, if a level of the interference signal is sufficiently lower than a level of the signal received from the serving BS, the interference cancellation is not performed.

If a level of the interference signal is higher than a level of the signal received from the serving BS, the performance degradation may be more considerable for the following reasons. For the decoded interference signal, even if normal channel decoding is achieved, a level of the self signal remaining after the interference cancellation is too low. Therefore, a value of an input metric to the channel decoder 615, generated in the symbol demapper 613, becomes a small value lower than an appropriate level, thereby causing performance degradation.

In embodiments of the present invention, a description will be made of a method and apparatus in which an OFDMA receiver including the interference canceller 620 prevents performance deterioration during channel decoding by implementation of fixed point calculation in the interference cancellation process.

When a receiver according to an exemplary embodiment of the present invention implements the repetitive channel decoding process two or more times, the receiver prevents the performance degradation from occurring in the channel decoder 615. To this end, a description will now be made of exemplary embodiments for performing normalization on the input metric to the channel decoder 615 using an interference/noise variance corresponding to the signal to be decoded during channel decoding.

FIG. 9 is a block diagram of an apparatus for normalizing an input metric to a channel decoder 615 in an OFDMA receiver 900 including a repetitive interference canceller 620 according to a first embodiment of the present invention. That is, in FIG. 9, the OFDMA receiver 900 for canceling interference signals using the channel decoding feedback method normalizes the input metric to the channel decoder 615. A normalization process according to an exemplary implementation of the present invention will first be described, and then, elements constituting the receiver of FIG. 9 will be described.

As described above, for the cancellation of the interference signals, exemplary embodiments of the present invention sequentially cancel interference signals $i_1(k)$ and $i_2(k)$ from Equation (1).

For interference cancellation, in the process of decoding a signal $s_1(k)$ from an interference cell with segment ID=1 and obtaining $d_1(n)$ by the receiver 900, a channel estimator 605 estimates $c_1(k)$, a repetition combiner 611 outputs a signal obtained by multiplying $y(k)$ by $q(k)$ and $c_1(k)^*$ (complex conjugate of $c_1(k)$) to a symbol demapper 613, and the symbol demapper 613 calculates an input metric to the channel decoder 615 using the signal received from the repetition combiner 611.

In an exemplary implementation, the signals obtained by subtracting $i_1(k)$ from $y(k)$ are specified as interference/ noise signals, thereby defining interference/noise variance. When data $d_1(n)$ with sector ID=1 is decoded, interferences and noises for the data $d_1(n)$ with sector ID=1 are $c_0(k)q_0(k)s_0(k)+i_2(k)+n(k)+I(k)$, and a variance for the interferences and noises are given as Equation (9).

$$\sigma_{n1}^2 = V\big[c_0(k)q_0(k)s_0(k) + i_2(k) + n(k) + I(k)\big] \quad \ldots \ldots \ldots (9)$$

In Equation (9), V[.] denotes a variance function. In a decoding process of $d_1(n)$, $\sigma_{n1}^2$ is reflected in normalization of an input metric to the channel decoder 615. After channel decoding, the channel decoder 615 can regenerate a signal $i_1(k)$ and cancel $i_1(k)$ from $y(k)$. The signal after interference cancellation, the signal output from a subtractor 602 is given as Equation (10).

$$y'(k) = c_0(k)q_0(k)s_0(k) + i_1(k) - \hat{i}_1(k) + i_2(k) + n(k) + I(k) \quad \ldots \ldots \ldots \ldots$$

$$(10)$$

Thereafter, decoding and interference cancellation are performed on the signal $d_2(n)$ transmitted from an interference cell with sector ID=2. The interference/noise variance used in a process of performing interference cancellation on the $i_2(k)$ is a variance of the interference signals $c_0(k)q_0(k)s_0(k)+i_1(k)+n(k)+I(k)$ for the $i_2(k)$ in the remaining signal, and is defined as Equation (11).

$$\sigma_{n2}^2 = V\big[c_0(k)q_0(k)s_0(k) + i_1(k) - \hat{i}(k) + n(k) + I(k)\big] \quad \ldots \ldots \ldots \ldots (11)$$

According to an exemplary implementation, a decoding process for a signal $i_2(k)$ is performed in the method used for decoding the $i_1(k)$. In the decoding process, $\sigma_{n2}^2$ of Equation (11) is used.
If decoding on the signal $i_2(k)$ is successfully performed, $d_2(n)$ can be obtained, and $i_2(k)$ can be effectively calculated. In this decoding process, for the noises contributing to normalization of the metric, approximation can be made as given by Equation (12), on the assumption that decoding and interference cancellation on $d_1(n)$ were completely performed.

$$\sigma_{n2}'^2 = V\big[c_0(k)q_0(k)s_0(k) + n(k) + I(k)\big] \quad \ldots \ldots \ldots \ldots (12)$$

In a decoding process of $i_2(k)$, $\sigma_{n2}^2$ is replaceable with $\sigma_{n2}'^2$, because, for example, in the situation where the interference cancellation is normally performed, $V[i_2(k) - \hat{i}_2(k)]$ is close to 0 and $\sigma_{n2}'^2$ will be almost similar to $\sigma_{n2}^2$. Exemplary embodiments of the the present invention cover various possible cases where $\sigma_{n2}'^2$ and $\sigma_{n2}^2$ are used.
The signal left after the interference cancellation for the interference signals $i_1(k)$ and $i_2(k)$ is performed is given as Equation (13).

$$c_0(k)q_0(k)s_0(k) + i_1(k) - \hat{i}_1(k) + i_2(k) - \hat{i}_2(k) + n(k) + I(k) \quad \ldots \ldots \ldots \ldots$$

$$(13)$$

From Equation (13), the signal $d_0(n)$ transmitted from the serving cell is decoded. When an input metric to the channel decoder 615 is normalized, interferences and noises for $s_0(k)$ can be expressed as Equation (14) for the finally left signal.

$$i_1(k) - \hat{i}_1(k) + i_2(k) - \hat{i}_2(k) + n(k) + I(k) \quad \ldots \ldots \ldots \ldots (14)$$

In addition, a variance of Equation (14) is given as Equation (15).

$$\sigma_{n3}^2 = V\left[i_1(k) - \hat{i}(k) + i_2(k) - \hat{i}_2(k) + n(k) + I(k)\right] \quad \dots\dots\dots (15)$$

On the assumption that the interference cancellation was almost perfectly performed, Equation (16) is given for Equation (15).

$$\sigma_{n3}'^2 = V\left[n(k) + I(k)\right] \quad \dots\dots\dots (16)$$

In the normalization process of the final self signal (that is, signal received from the serving BS), $\sigma^2_{n3}$ or $\sigma^2_{n3}$ given in Equation (15) can be used. For example, $\sigma^2_{n3}$ or $\sigma^2_{n3}$ can be used as a value for normalizing an input to the channel decoder 615.

For example, when the interference cancellation was successfully performed, values of $V[i_1(k)-i_1(k)]$ and $V[i_2(k)-i_2(k)]$ are sufficiently small values, so that $\sigma^2_{n3}$ can be used as an approximation of $\sigma^2_{n3}$. Exemplary embodiments of the present invention include a process of performing normalization using $\sigma^2_{n3}$ or $\sigma^2_{n3}$, and a processed value of the value corresponding thereto.

For the IEEE 802.16e-based OFDMA system, the interference/noise variances of Equation (9), Equation (11), Equation (12), Equation (15) and Equation (16) can be calculated in various methods using pilot sub-carriers in a preamble or a data region. The interference/noise variances $\sigma^2_{n2}$ and $\sigma^2_{n3}$ given in Equation (11) and Equation (15) are calculated using pilot sub-carriers deallocated from a signal y'(k) whose interference was canceled in each interference cancellation step. These can be calculated in various methods.

Approximations $\sigma^2_{n2}$ and $\sigma^2_{n3}$ of the interference/noise variances given in Equation (12) and Equation (16) can be estimated using pilots in a preamble. Because the preamble uses only the non-overlapping pilots for each individual segment ID, $\sigma^2_{n2}$ and $\sigma^2_{n3}$ given in Equation (12) and Equation (16) can be calculated in the following method. This is because in the IEEE 802.16e standard, the pilots having different segment IDs do not overlap.

Generally, for the IEEE 802.16e-based OFDMA system, variances of Equation (17) can be calculated through power measurement based on the fact that the pilots having different segment IDs of a preamble do not overlap.

$$\begin{aligned}
\hat{\sigma}_0^2 &= V\left[c_0(k)q_0(k)s_0(k)\right] \\
\hat{\sigma}_1^2 &= V\left[c_1(k)q_1(k)s_1(k)\right] \\
\hat{\sigma}_2^2 &= V\left[c_2(k)q_2(k)s_2(k)\right] \\
\hat{\sigma}_3^2 &= V\left[n(k) + I(k)\right]
\end{aligned} \quad \dots\dots\dots (17)$$

Using the variances calculated in Equation (17), the calculation of the interference/noise variances given in Equation (12) and Equation (16), required in the interference cancellation process, can be performed. For example, $\hat{\sigma}^2_0$, as given in Equation (17), denotes an estimate of received power for the signal $s_0(k)$ from the serving cell. This can be estimated using pilot sub-carriers in a preamble. However, although power of the interference signals, all of which use a segment ID=0, can be added to the actual estimate, this value will be a negligibly small value if the cell planning was ideally performed. In Equation (17), $\hat{\sigma}^2_1$ and $\hat{\sigma}^2_2$, as given in the equation, are estimates of received power for the signals $s_1(k)$ and $s_2(k)$ from the interference cells. A signal power value of another cell having the same segment ID can be added to the actual estimate. The interference/noise variances given in Equation (9), Equation (12) and Equation (16) can be expressed as Equation (18), using the values given in Equation (17).

$$\sigma_{n1}^2 = V\big[c_0(k)q_0(k)s_0(k) + i_2(k) + n(k) + I(k)\big] = \sigma_0^2 + \sigma_2^2 + \sigma_3^2$$

$$\sigma_{n2}'^2 = V\big[c_0(k)q_0(k)s_0(k) + n(k) + I(k)\big] = \sigma_0^2 + \sigma_3^2$$

$$\sigma_{n3}'^2 = V\big[n(k) + I(k)\big] = \sigma_3^2$$

$$\cdots\cdots\cdots\cdots$$

(18)

The interference/noise variances enumerated in Equation (18) can be expressed as a linear combination of the variances $\hat{\sigma}_0^2, \hat{\sigma}_1^2, \hat{\sigma}_2^2, \hat{\sigma}_3^2$ calculated in Equation (17).

For example, while the receiver is performing interference cancellation, for normalization of an input metric to the channel decoder 615, an LLR normalizer 904 uses $\sigma_{n1}^2$, $\sigma_{n2}^2$, $\sigma_{n3}^2$ in each interference cancellation step. For example, the LLR normalizer 904 performs normalization using $\sigma_{n1}^2$ in order to cancel the interference signal received from the BS with segment ID=1, and performs normalization using $\sigma_{n2}^2$ in order to cancel the interference signal received from the BS with segment ID=2. Alternatively, the LLR normalizer 904 can use $\sigma_{n1}^2, \sigma_{n2}^2, \sigma_{n3}^2$ as the interference/noise variances necessary for normalization of an input metric to the channel decoder 615 in each interference cancellation step. In the former case, however, in calculating the interference/noise variances, the LLR normalizer 904 should repetitively calculate noise variances using the interference-canceled signal y'(k). In the latter case where $\sigma_{n1}^2$, $\sigma_{n2}^2$, $\sigma_{n3}^2$ are used, the LLR normalizer 904 can use the previously calculated interference/noise variances of Equation (18). This is because in the preamble, $\hat{\sigma}_0^2, \hat{\sigma}_1^2, \hat{\sigma}_3^2$ are already calculated and $\sigma_{n1}^2, \sigma_{n2}^2 \sigma_{n3}^2$ can be simply expressed as a linear combination of $\hat{\sigma}_0^2, \hat{\sigma}_1^2, \hat{\sigma}_3^2$. In an exemplary implementation, the use of only the y(k) of the preamble is sufficient for calculation of the interference/noise variances.

As described above, FIG. 9 illustrates an example of the methods for normalizing an input metric to the channel decoder 615 for the receiver 900 including the interference canceller 620.

In case of FIG. 9, $\sigma_{n1}^2, \sigma_{n2}^2, \sigma_{n3}^2$ are used as the interference/noise variances in the interference cancellation process. In FIG. 9, the LLR normalizer 904 multiplies the LLR value output from the symbol demapper 613 by a recip-

rocal $\dfrac{1}{\sigma_n^2}$ of an interference/noise variance, or takes an operation corresponding thereto, thereby performing normalization on the input metric to the channel decoder 615. That is, in FIG. 9, the symbol demapper 613 first calculates $L(-u_{i,j})$ using Equation (8), and thereafter, the LLR normalizer 904 performs an operation of multiplying the metric value calculated by the symbol demapper 613 by $\dfrac{1}{\sigma_n^2}$. The interference/noise variances are calculated from y(k), and from the previously calculated interference/noise variances $\hat{\sigma}_0^2, \hat{\sigma}_1^2, \hat{\sigma}_2^2, \hat{\sigma}_3^2$, the interference/noise variances $\sigma_{n1}^2, \sigma_{n2}^2, \sigma_{n3}^2$ used for repetitive interference cancellation are calculated. This operation is performed by an interference/noise variance estimator 902, and a controller 910 provides the interference/noise variance estimator 902 with information (IC Info) indicating which of $\sigma_{n1}^2, \sigma_{n2}^2, \sigma_{n3}^2$ it will output according to each interference cancellation step.

The interference/noise variance estimator 902 provides the LLR normalizer 904 with interference/noise variances corresponding to the information received from the controller 910, or with information (i.e. processed information) corresponding thereto. That is, when the interference/noise variance estimator 902 delivers $\sigma_n^2$ to the LLR normalizer 904, the LLR normalizer 904 multiplies the symbol-demapped signal $L(-u_{1,i})$ by a reciprocal of the $\sigma_n^2|$, and when the

interference/noise variance estimator 902 delivers $\dfrac{1}{\sigma_n^2}$ the LLR normalizer 904 multiplies the symbol-demapped signal

$L(-u_{1,i})$ by $\dfrac{1}{\sigma_n^2}$ and outputs the resulting signal to the channel decoder 615.

For a better understanding of the foregoing exemplary embodiment of the present invention, an additional description will now be made of a process of normalizing an input to the channel decoder. For example, assume that an ID of the serving BS is '1', and an ID of a neighbor BS having the highest CINR among the neighbor BSs (with ID=2 and ID=3) is '2', and an ID of a neighbor BS having the next highest CINR is '3'.

In this case, the receiver for canceling the interference signals according to the present invention first normalizes an input metric to the channel decoder 615 with an interference/noise variance of the signal received from the BS with ID=2, and then normalizes an input metric to the channel decoder 615 with an interference/noise variance of the signal received from the BS with ID=3. After the signals from the neighbor BSs are all canceled, the receiver normalizes the input metric with an interference/noise variance of the signal received from the serving BS. That is, the receiver performs normalization on the input to the channel decoder with the interference/noise variance in the state where the interference signal from the BS with ID=2 is canceled in a process of calculating an interference/noise variance for the BS with ID=3, and the state where interference signals from the BSs with ID=2 and 3 are canceled in a process of decoding the signal from the BS with ID=1.

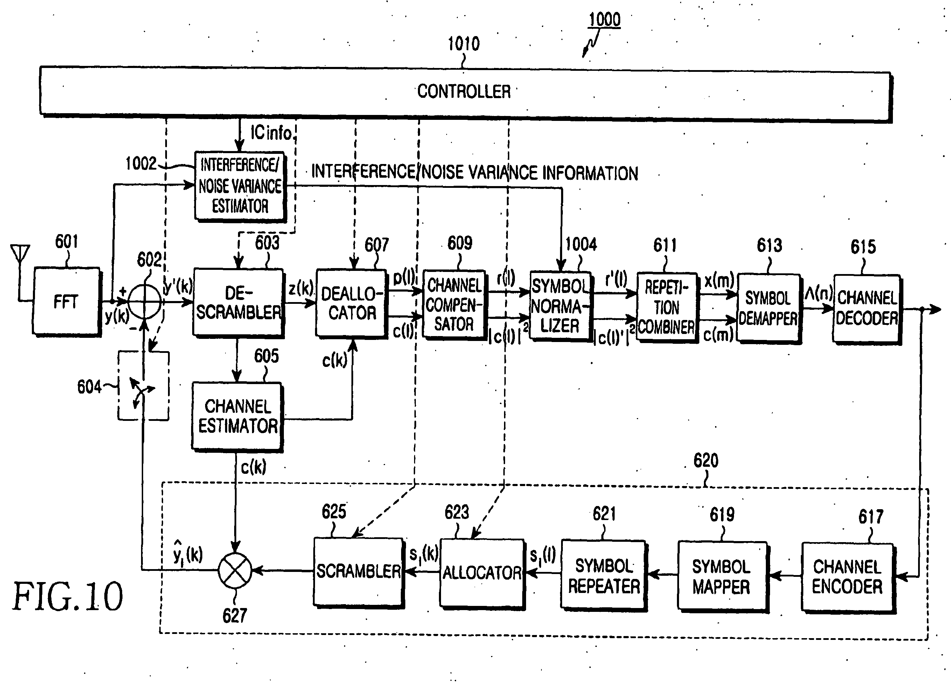

FIG. 10 is a block diagram of an apparatus for normalizing an input metric to a channel decoder in an OFDMA receiver 1000 including a repetitive interference canceller 620 according to a second exemplary embodiment of the present invention. An interference/noise variance estimator 1002 is also provided.

The apparatus of FIG. 10 according to the second exemplary embodiment of the present invention is almost equal in operation to the apparatus of FIG. 9, but is different in that normalization on an input metric to a channel decoder 615 is performed in a different position. In the structure of FIG. 10, a symbol normalizer 1004 previously performs normalization on the output of a channel compensator 609 so that an input to the channel decoder 615 operates in an appropriate region. That is, the apparatus of FIG. 10 realizes normalization by previously multiplying the input to a repetition combiner 611 by $\dfrac{1}{\sigma_n^2}$.

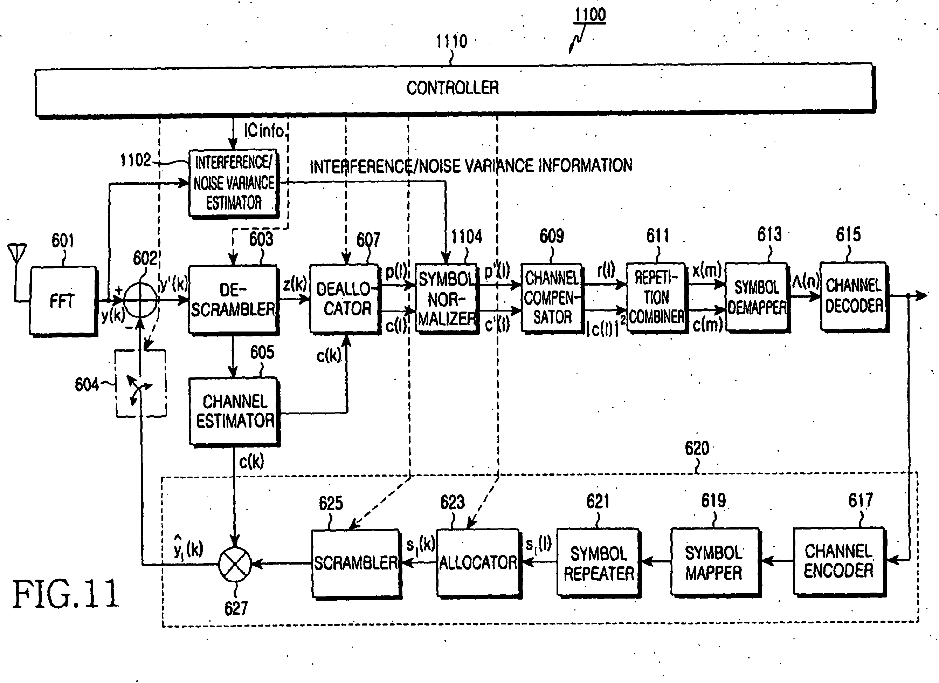

FIG. 11 is a block diagram of an apparatus for normalizing an input metric to a channel decoder 615 in an OFDMA receiver 1100 including a repetitive interference canceller 620 according to a third exemplary embodiment of the present invention.

In FIG. 11, normalization on the metric is performed at the output of a deallocator 607, and a symbol normalizer 1104 normalizes the output of the deallocator 607. An interference/noise variance estimator 1102 is also provided.

Other elements can be analogous to the corresponding elements of the foregoing exemplary embodiments, so a description thereof will be omitted.

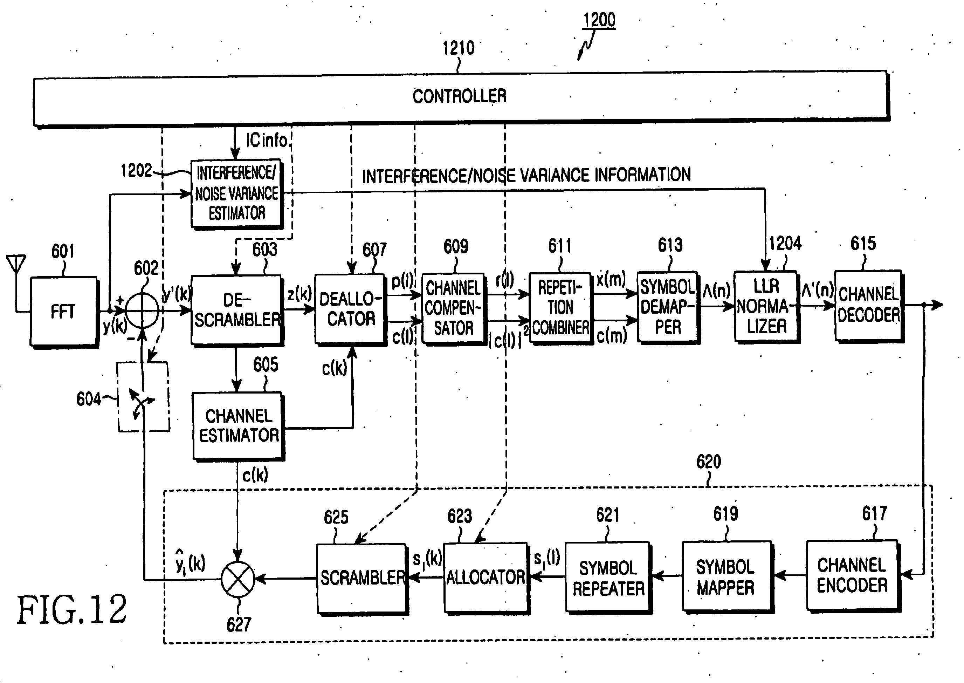

FIG. 12 is a block diagram of an exemplary apparatus for normalizing an input metric to a channel decoder 615 in an OFDMA receiver 1200 including a repetitive interference canceller 620 according to a fourth exemplary embodiment of the present invention. An LLR normalizer 1204 and an interference/noise variance estimator 1202 are also provided. The apparatus according to the fourth exemplary embodiment of the present invention is almost similar in operation to the apparatus of FIG. 9, but is different in that $\sigma_{n1}^2, \sigma_{n2}^2, \sigma_{n3}^2$ are used as interference/noise variances. In this case, the apparatus should use a value of the repetitively obtained y'(k) in estimating the interference/noise variances. When calculating $\sigma_{n1}^2, \sigma_{n2}^2, \sigma_{n3}^2$, the apparatus uses pilot sub-carriers deallocated from the y'(k). In FIG. 12, normalization is applied to the output of a symbol demapper 613.

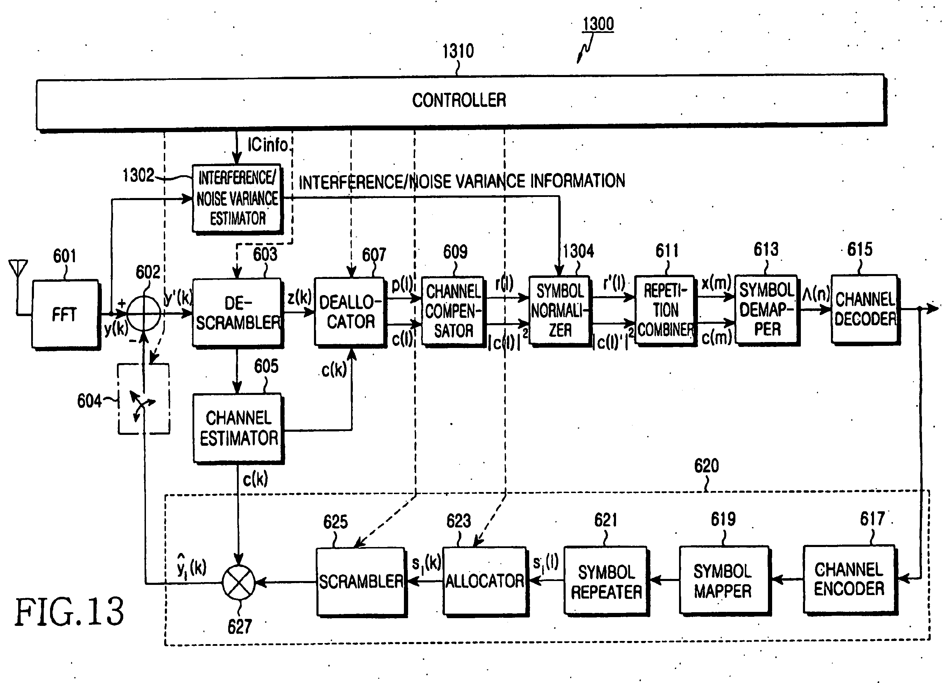

FIG. 13 is a block diagram of an apparatus for normalizing an input metric to a channel decoder 615 in an OFDMA receiver 1300 including a repetitive interference canceller 620 according to a fifth exemplary embodiment of the present invention. A symbol normalizer 1304 and an interference/noise variance estimator 1302 are also provided. The apparatus according to the fifth exemplary embodiment, like the exemplary apparatus of FIG. 12, uses $\sigma_{n1}^2, \sigma_{n2}^2, \sigma_{n3}^2$ as interference/noise variances. In FIG. 13, in estimating the interference/noise variances, the receiver 1300 should repetitively perform the calculation using y'(k). In calculating $\sigma_{n1}^2, \sigma_{n2}^2, \sigma_{n3}^2$, the receiver 1300 uses pilot sub-carriers deallocated from the y'(k). Using the calculated interference/noise variances, the receiver 1300 applies a normalization operation of multiplying the output of a channel compensator 609 by a reciprocal of the interference/noise variance, thereby implementing normalization on the input to the channel decoder 615.

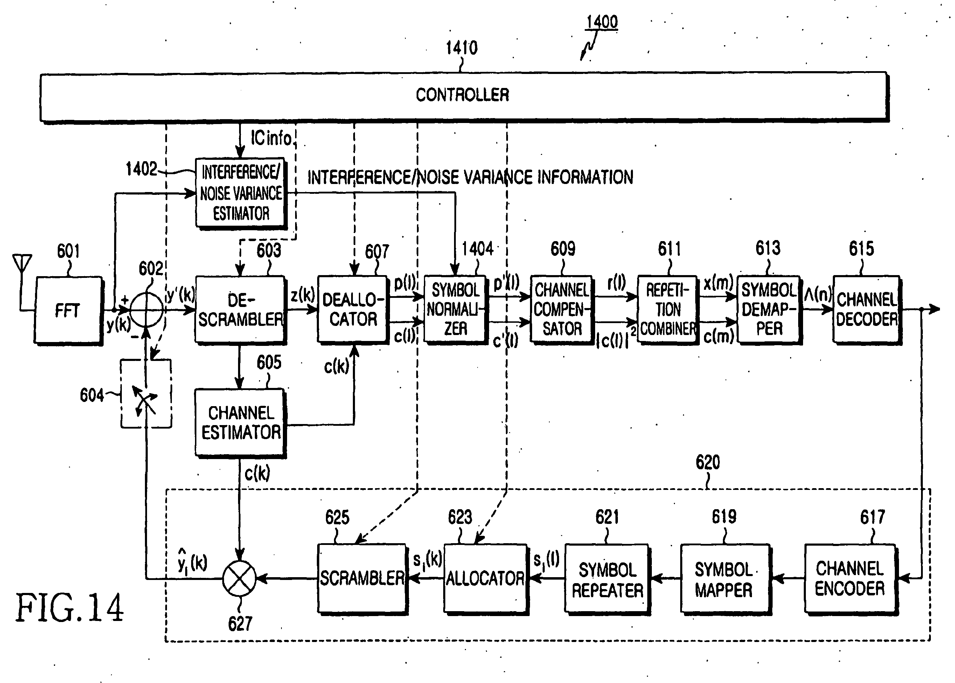

FIG. 14 is a block diagram of an apparatus for normalizing an input metric to a channel decoder 615 in an OFDMA receiver 1400 including a repetitive interference canceller 620 according to a sixth exemplary embodiment of the present invention.

In FIG. 14, an interference/noise variance estimator 1402 obtains interference/noise information from controller 1410 in the manner similar to that of FIG. 13, and a symbol normalizer 1404 performs normalization on the output of the symbol demapper 613. Other elements are equal to the corresponding elements of the foregoing embodiments, so a description thereof will be omitted.

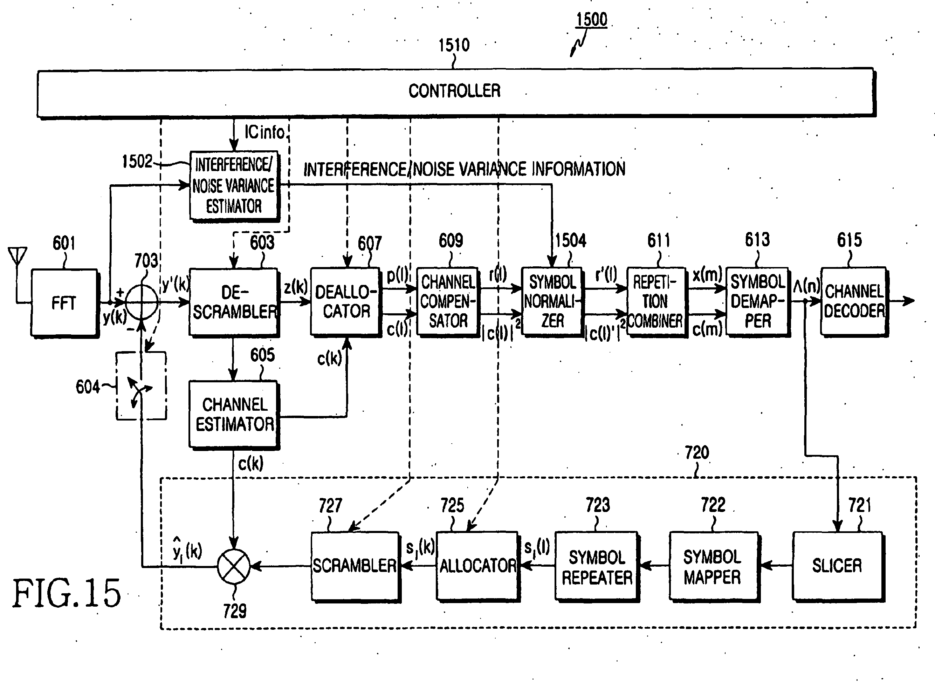

FIG. 15 is a block diagram of an apparatus for normalizing an input metric to a channel decoder 615 in an OFDMA receiver 1500 including an slicer method-based interference canceller 720 according to a seventh exemplary embodiment of the present invention. A controller 1510, a symbol normalizer 1504 and an interference/noise variance estimator 1502 are also provided.

FIG. 15 shows an exemplary method for normalizing an input metric to a channel decoder in a slicer method-based interference cancellation receiver. Herein, slicing means hard decision. This method does not perform normalization when performing interference cancellation, and performs the normalization only when decoding the last self signal. Although the receiver 1500 of FIG. 15 uses $\sigma_{n1}^2, \sigma_{n2}^2, \sigma_{n3}^2$ for metric normalization for a channel decoder 615 and normalizes the output of a symbol demapper 613, it can also normalize an input metric to the channel decoder 615 using a normalizer as done in the first to sixth exemplary embodiments where the channel decoding feedback method is used.

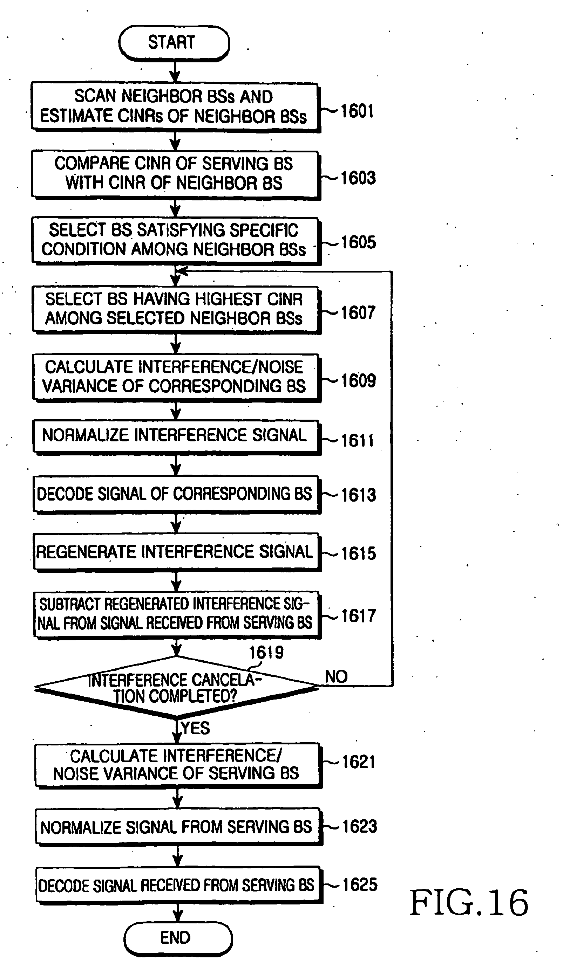

FIG. 16 is a flowchart illustrating an exemplary method for normalizing an input metric to a channel decoder 615 in a receiver including an interference canceller 620 based on a channel decoding feedback method according to an embodiment of the present invention. The flowchart provides an exemplary method for canceling an interference signal to which a low coding rate is applied, for the control information to which a low coding rate is applied.

Referring to FIG. 16, for noise cancellation, a receiver scans in step 1601 an ID of a neighbor BS from which an interference signal is received, and measures a CINR corresponding to the BS ID. The CINR is measured by a CINR measurer included in the receiver. Thereafter, in step 1603, the receiver compares the measured CINRs of neighbor BSs with a CINR of a serving BS to which the terminal currently belongs thereby to measure an interference level of the neighbor BS, and then compares the CINR of the serving BS with the CINR of the neighbor BS. For the comparison, the receiver may determine whether a difference between the two CINRs is greater than a specific threshold. In step 1605, the receiver selects and enumerates (or reorders) the neighbor BSs, the comparison result for which satisfies a specific condition. For example, the receiver enumerates the neighbor BSs in order of a high-strength interference signal, and performs decoding no longer after decoding of the self signal.

In step 1607, the receiver first selects a BS having the highest CINR in order to cancel the interference signal received from an interference BS having the highest interference level among the selected BSs. That is, the receiver enumerates BS signals to be decoded, in step 1605, and determines an interference BS signal to be decoded in the enumerated order in step 1607. For the CINR estimation, a pilot signal of a preamble or a pilot signal in a data region is used, and because the pilot signal in the data region is greatly affected by the interference signal as in the channel estimation scheme, the result of estimating a CINR using the pilot signal in the data region is inferior in performance to the result of estimating a CINR using the pilot signal in a preamble. Therefore, a method of using the pilot signal in the preamble can be advantageous for CINR estimation for an operation of an interference canceller. In an exemplary embodiment of the present invention, the receiver performs interference cancellation in order of a high-CINR interference BS, if there are two or more interference BSs that generate an interference signal higher than a threshold. For example, the receiver sequentially cancels the interference signals from the interference signal having a higher level.

The reason for canceling the interference signals from the highest-strength interference signal is, for example, because it may be easier to detect the high-strength interference signal rather than the low-strength interference signal, thus increasing interference cancellation performance. After selecting the signal from the BS having the highest-strength interference signal in step 1607, the receiver calculates an interference/noise variance of the corresponding BS in step 1609, and performs normalization on the interference signal of the corresponding BS in step 1611. The interference signal normalization in step 1611 can be applied to any one of an output of a symbol demapper 613, an output of a channel compensator 609, and an output of a deallocator 607. After the normalization on the interference signal, the receiver decodes the signal from the corresponding BS in step 1613. An operation of step 1613 means the start of decoding an OFDMA frame. Step 1613 includes all steps that should be completed before the start of the interference cancellation, including reception of a preamble.

In step 1615, the receiver regenerates the decoded interference signal using an interference signal canceller. Based on the data decoded after the decoding in step 1613, the receiver regenerates the interference signal through channel coding, modulation, sub-channel repetition, and allocation processes.

Thereafter, in step 1617, the receiver subtracts the regenerated interference signal from the signal received from the serving BS using a subtractor 602, thereby performing an interference cancellation process. In an exemplary implementation, the process of regenerating and canceling the interference signal regenerates and cancels the signal after channel decoding as done in the channel decoding feedback method.

After canceling the highest-strength interference signal in step 1617, the receiver determines in step 1619 whether the interference cancellation is completed. The receiver may determine that the interference cancellation is completed, if there is no BS satisfying a specific condition. If the interference cancellation has not been completed yet, the receiver returns to step 1607 to cancel the interference signal from a BS having the next highest interference signal strength. The receiver repeats the process of selecting a BS having the next highest interference/noise signal strength in step 1617, calculating an interference/noise variance of the selected BS in step 1609, and normalizes the interference signal in step 1611.

However, if it is determined in step 1619 that cancellation of the interference signals for the serving BS has been completed, the receiver proceeds to step 1621 where it calculates an interference/noise variance of the serving BS signal. The receiver normalizes the serving BS signal in step 1623, and then decodes the signal from the serving BS in step 1625.

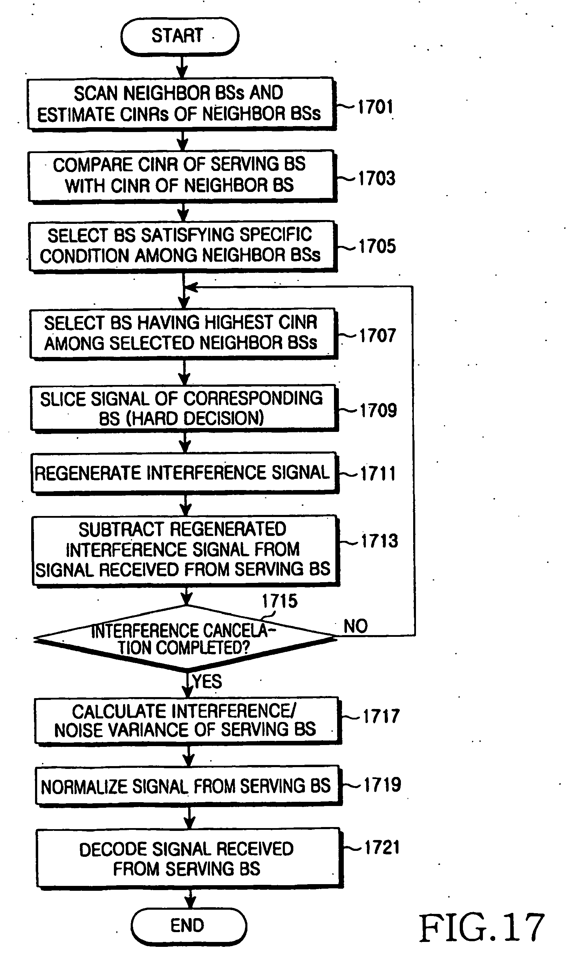

FIG. 17 is a flowchart illustrating an exemplary method for normalizing an input metric to a channel decoder 615 in a receiver including an interference canceller 720 based on a slicer method according to an exemplary embodiment of the present invention.

Referring to FIG. 17, for noise cancellation, a receiver scans in step 1701 an ID of a neighbor BS from which an interference signal is received, and measures a CINR corresponding to the BS ID. The CINR is measured by a CINR measurer included in the receiver. Thereafter, in step 1703, the receiver compares the measured CINRs of neighbor BSs with a CINR of a serving BS to which the terminal currently belongs thereby to measure an interference level of the neighbor BS, and then compares the CINR of the serving BS with the CINR of the neighbor BS. For the comparison, the receiver may determine whether a difference between the two CINRs is greater than a specific threshold. In step 1705, the receiver selects the neighbor BSs, the comparison result for which satisfies a specific condition. The BS satisfying the specific condition indicates the neighbor BSs, interference from which is considerable.

In step 1707, the receiver first selects a BS having the highest CINR in order to cancel the interference signal received from the interference BS having the highest interference level among the selected BSs. For example, the receiver enumerates the BS signals to be decoded, in step 1705, and determines an interference BS signal to be decoded in the enumerated order in step 1707.

The reason for canceling the interference signals from the highest-strength interference signal is, for example, because it may be is easier to detect the high-strength interference signal rather than the low-strength interference signal, thus increasing interference cancellation performance. After selecting the signal from the BS having the highest-strength interference signal in step 1707, the receiver performs slicing (or hard decision) on the signal from the corresponding BS in step 1709.

In step 1711, the receiver regenerates the interference signal from the corresponding BS using the interference canceller 720. After the slicing in step 1709, the receiver regenerates the interference signal through symbol mapping, sub-channel repetition and allocation processes in step 1711.

Thereafter, in step 1713, the receiver subtracts the regenerated interference signal from the signal received from the serving BS using a subtractor 703, thereby performing an interference cancellation process. For example, the process of regenerating and canceling the interference signal regenerates and cancels the signal before channel decoding as done in the slicer method.

After canceling the highest-strength interference signal in step 1713, the receiver determines in step 1715 whether the interference cancellation is completed. The receiver may determine that the interference cancellation is completed, if there is no BS satisfying a specific condition. If the interference cancellation has not been completed yet, the receiver returns to step 1707 to cancel the interference signal from a BS having the next highest interference signal strength. The receiver repeats the process of selecting a BS having the next highest interference/noise signal strength in step 1707, slicing the next highest-strength BS signal in step 1709, regenerating the interference signal in step 1711, and subtracting the interference signal in step 1713.

However, if it is determined in step 1715 that cancellation of the interference signals for the serving BS has been completed, the receiver proceeds to step 1717 where it calculates an interference/noise variance of the serving BS signal. The receiver normalizes the serving BS signal in step 1719, and then decodes the signal from the serving B S in step 1721.

In an exemplary implementation, the procedure of FIG. 17 may be similar to the procedure of FIG. 16. In the example of FIG. 17 a slicer method rather than the channel decoding feedback method is used for interference signal processing, so that metric normalization for the interference signals is not necessary.

As can be understood from the foregoing description, in a receiver of an OFDMA system according to exemplary embodiments of the present invention, in performing a repetitive channel decoding process two or more times in the interference cancellation process, the interference cancellation receiver based on the channel decoding feedback method performs normalization on an input metric to a channel decoder using an interference/noise variance corresponding to the signal to be decoded during channel decoding, thereby reducing performance degradation at the channel decoder.

While the invention has been shown and described with reference to certain exemplary embodiments thereof, it will be understood by those skilled in the art that various changes in form and details may be made therein without departing from the scope of the invention as defmed by the appended claims and their equivalents.

**Claims**

1.  A method for canceling a neighbor cell interference signal upon receiving a signal transmitted from a serving base station BS in a receiver of an Orthogonal Frequency Division Multiple Access OFDMA system, the method comprising:

    detecting (1601,1701) interference signals from signals received from at least one of a plurality of neighbor BSs and a serving BS;
    measuring (1601, 1701) strength of the detected interference signals, and determining (1605, 1705) whether the measured strength is higher than a threshold value;
    reordering in the order from highest to lowest magnitude of the strength of the interference signal a list of neighbor BSs satisfying the determination result;

selecting (1607, 1707) and detecting interference signals in the order of the reordered neighbor BSs;

calculating (1609) and normalizing (1611) an interference/noise variance for one of the detected interference signals in the order of the reordered neighbor BSs;

regenerating (1615, 1711) a regenerated interference signal by decoding (1613) the normalized interference signal or performing (1709) hard decision on the normalized interference signal; and subtracting (1617,1713) the regenerated interference signal from the received signal.

2. The method of claim 1, wherein the detecting of the interference signals comprises measuring a Carrier to Interference plus Noise Ratio CINR of the signals received from the at least one of the plurality of the neighbor BSs and the serving BS.

3. The method of claim 1, wherein the detecting of the interference signals comprises measuring strength of pilot signals received from the at least one of the plurality of the neighbor BSs and the serving BS.

4. The method of claim 1, wherein the reordering in the order from highest to lowest magnitude of the strength of the interference signal of the list of the neighbor BSs satisfying the determination result comprises identifying neighbor BSs satisfying the determination result using identifiers IDs of the neighbor BSs.

5. The method of claim 1, wherein regenerating the regenerated interference signal by decoding comprises normalizing an input metric to a channel decoder using an interference/noise variance corresponding to the signal to be decoded.

6. The method of claim 5, further comprising normalizing, if the interference signals of the neighbor BSs satisfying the determination result are all canceled, an input metric to a channel decoder using an interference/noise variance of the signal received from the serving BS.

7. An apparatus for canceling a neighbor cell interference signal in a receiver for receiving a signal transmitted from a serving base station BS in an Orthogonal Frequency Division Multiple Access OFDMA system, the apparatus comprising:

a controller (1410,1510) is adapted to perform a control operation of detecting interference signals from signals received from at least one of a plurality of neighbor BSs and a serving BS, measuring strength of the detected interference signals, and determining whether the measured strength is higher than a threshold value, reordering in the order from highest to lowest magnitude of the strength of the interference signal a list of neighbor BSs satisfying the determination result, selecting and detecting interference signals in the order of the reordered neighbor BSs, calculating and normalizing an interference/noise variance for one of the detected interference signals in the order of the reordered neighbor BSs, regenerating a regenerated interference signal by decoding the normalized interference signal or performing hard decision on the normalized interference signal, and subtracting the regenerated interference signal from the received signal

an interference canceller (620,720) for regenerating the regenerated interference signal under the control of the controller;

an interference/noise variance estimator (1402,1502) for outputting the interference/noise variance under the control of the controller;

a normalizer (1404,1504) or normalizing an input metric based on the interference/noise variance received from the interference/noise variance estimator; and

a subtractor (602, 702) for subtracting the regenerated interference signal from the signal received from the serving BS.

8. The apparatus of claim 7, wherein the strength of the detected interference signals comprises a Carrier to Interference plus Noise Ratio CINR.

9. The apparatus of claim 7, wherein the strength of the detected interference signals comprises a pilot signal strength.

10. The apparatus of claim 7, wherein the normalizer further is adapted to normalize, if the interference signals of the neighbor BSs satisfying the determination result are all canceled, an input metric to a channel decoder using an interference/noise variance of the signal received from the serving BS under the control of the controller.

**EP 1 793 507 B1**

**Patentansprüche**

1. Verfahren zum Aufheben eines Nachbarzellinterferenzsignals beim Empfang eines Signals, das von einer bedienenden Basisstation BS übertragen wird, in einem Empfänger eines Orthogonal Frequency Division Multiple Access OFDMA Systems, wobei das Verfahren umfasst:

   Erfassen (1601, 1701) von Interferenzsignalen von Signalen, die von zumindest einem aus einer Mehrzahl an Nachbarbasisstationen und von einer bedienenden Basisstation empfangen werden;
   Messen (1601, 1701) der Stärke der erfassten Interferenzsignale und Bestimmen (1605, 1705), ob die gemessene Stärke größer als ein Schwellwert ist;
   Neu Sortieren einer Liste an Nachbarbasisstationen, die das Bestimmungsergebnis erfüllen, in der Reihenfolge von der höchsten zur niedrigsten Größe der Stärke des Interferenzsignals;
   Auswählen (1607, 1707) und Erfassen von Interferenzsignalen in der Reihenfolge der neu sortierten Nachbarbasisstationen;
   Berechnen (1609) und Normieren (1611) einer Interferenz/Rausch-Varianz für eines der erfassten Interferenzsignale in der Reihenfolge der neu sortierten Nachbarbasisstationen;
   Neu Erzeugen (1615, 1711) eines neu erzeugten Interferenzsignals durch Dekodieren (1613) des normierten Interferenzsignals oder durch Ausführen von (1709) hard decision auf dem normierten Interferenzsignal; und
   Abziehen (1617, 1713) des neu erzeugten Interferenzsignals von dem empfangenen Signal.

2. Verfahren nach Anspruch 1, wobei das Erfassen des Interferenzsignals ein Messen eines Träger zu Interferenz plus Rausch Verhältnisses, Carrier to Interference plus Noise Ratio, CNIR des Signals, das von zumindest einem aus der Mehrzahl an Nachbarbasisstationen und von der bedienenden Basisstation empfangen wird, umfasst.

3. Verfahren nach Anspruch 1, wobei das Erfassen des Interferenzsignals ein Messen der Stärke von Pilotsignalen umfasst, die von zumindest einem aus der Mehrzahl an Nachbarbasisstationen und von der bedienenden Basisstation empfangen werden.

4. Verfahren nach Anspruch 1, wobei das neue Sortieren der Liste an Nachbarbasisstaionen, die das Bestimmungsergebnis erfüllen, in der Reihenfolge von der höchsten zur niedrigsten Größe der Stärke des Interferenzsignals ein Identifizieren von Nachbarbasisstationen, die das Bestimmungsergebnis erfüllen, unter Verwendung von Kennungen IDs der Nachbarbasisstationen umfasst.

5. Verfahren nach Anspruch 1, wobei das neue Erzeugen des durch Dokodieren neu erzeugten Interferenzsignals ein Normieren einer Eingabemetrik an einen Kanaldekodierer unter Verwendung einer Interferenz/Rausch Varianz, die dem zu dekodierenden Signal entspricht, umfasst.

6. Verfahren nach Anspruch 5, weiter aufweisend, wenn die Interferenzsignale der Nachbarbasisstationen, die das Bestimmungsergebnis erfüllen, alle aufgehoben sind, ein Normieren einer Eingabemetrik an einen Kanaldekodierer unter Verwendung einer Interferenz/Rausch Varianz des Signals, das von der bedienenden Basisstation empfangen wurde.

7. Vorrichtung zum Aufheben eines Nachbarzellinterferenzsignals in einem Empfänger zum Empfangen eines Signals, das von einer bedienenden Basisstation BS empfangen wird, in einem Orthogonal Frequency Division Mulitple Access OFDMA System, wobei die Vorrichtung umfasst:

   ein Steuergerät (1410, 1510), das angepasst ist, eine Steueroperation eines Erfassens von Interferenzsignalen von Signalen, die von zumindest einem aus einer Mehrzahl an Nachbarbasisstationen und von einer bedienenden Basisstation empfangen werden, eines Messens der Stärke des erfassten Interferenzsignals und eines Bestimmens ob die gemessene Stärke größer als ein Schwellwert ist, eines neu Sortierens einer Liste an Nachbarbasisstationen, die das Bestimmungsergebnis erfüllen, in der Reihenfolge von der höchsten zur niedrigsten Größe der Stärke des Interferenzsignals, eines Auswählens und Erfassens von Interferenzsignalen in der Reihenfolge der neu sortierten Nachbarbasisstationen, eines Berechnens und Normierens einer Interferenz/Rausch Varianz für eines der erfassten Interferenzsignale in der Reihenfolge der neu sortierten Nachbarbasisstationen, eines neu Erzeugens eines neu erzeugten Interferenzsignals durch Dekodieren des normierten Interferenzsignals oder Ausführens von hard decision auf dem normierten Interferenzsignal und eines Abziehens des neu erzeugten Interferenzsignals von dem empfangenen Signal,
   einen Interferenzaufheber (620, 720) zum neu Erzeugen des neuerzeugten Interferenzsignals unter der Steuerung des Steuergerätes;

einen Interferenz/Rausch Varianzschätzer (1402, 1502) zum Ausgeben der Interferenz/Rausch Varianz unter der Steuerung des Steuergerätes;

einen Normierer (1404, 1504) zum Normieren einer Eingabemetrik basierend auf der Interferenz/Rausch Varianz, die von dem Interferenz/Rausch Varianzschätzer empfangen wird; und

einen Subtrahierer (602, 702) zum Abziehen des neu erzeugten Interferenzsignals von dem Signal, das von der bedienenden Basisstation empfangen wird.

**8.** Vorrichtung nach Anspruch 7, wobei die Stärke der erfassten Interferenzsignale ein Träger zu Interferenz plus Rausch Verhältnis, Carrier to Inteference plus Noise Ratio, CNIR umfasst.

**9.** Vorrichtung nach Anspruch 7, wobei die Stärke des erfassten Interferenzsignals eine Pilotsignalstärke umfasst.

**10.** Vorrichtung nach Anspruch 7, wobei der Normierer weiterhin angepasst ist, wenn die Interferenzsignale der Nachbarbasisstationen, die das Bestimmungsergebnis erfüllen, alle aufgehoben sind, eine Eingabemetrik an einen Kanaldekodierer zu normieren unter Verwendung einer Interferenz/Rausch Varianz des Signals, das von der bedienenden Basisstation empfangen wird, unter der Steuerung des Steuergeräts.

## Revendications

**1.** Procédé pour l'annulation d'un signal d'interférence de cellules voisines lors de la réception d'un signal transmis par une station de base BS de desserte dans un récepteur d'un système d'Accès Multiple par Répartition Orthogonale de la Fréquence OFDMA, le procédé comprenant les étapes consistant à :

détecter (1601, 1701) des signaux d'interférence parmi les signaux reçus en provenance d'au moins une BS d'une pluralité de BS voisines et d'une BS de desserte ;

mesurer (1601, 1701) l'intensité des signaux d'interférence détectés, et déterminer (1605, 1705) si l'intensité mesurée est supérieure à une valeur seuil ;

reclasser une liste de BS voisines satisfaisant à la détermination, dans l'ordre allant de la plus grande intensité à la plus petite intensité du signal d'interférence ;

sélectionner (1607, 1707) et détecter les signaux d'interférence dans l'ordre des BS voisines reclassées ;

calculer (1609) et normaliser (1611) une variance d'interférence/bruit pour l'un des signaux d'interférence détectés dans l'ordre des BS voisines reclassées ;

regénérer (1615, 1711) un signal d'interférence regénéré en décodant (1613) le signal d'interférence normalisé ou en exécutant (1709) une décision dure sur le signal d'interférence normalisé ; et

soustraire (1617, 1713) le signal d'interférence regénéré du signal reçu.

**2.** Procédé selon la revendication 1, dans lequel la détection des signaux d'interférence comprend l'étape consistant à mesurer un rapport Porteuse sur Interférence plus Bruit (CINR) des signaux reçus en provenance de l'au moins une BS de la pluralité de BS voisines et de la BS de desserte.

**3.** Procédé selon la revendication 1, dans lequel la détection des signaux d'interférence comprend l'étape consistant à mesurer l'intensité de signaux pilotes reçus en provenance de l'au moins une BS de la pluralité de BS voisines et de la BS de desserte.

**4.** Procédé selon la revendication 1, dans lequel le reclassement de la liste de BS voisines satisfaisant à la détermination, dans l'ordre allant de la plus grande intensité à la plus petite intensité du signal d'interférence, comprend l'étape consistant à identifier les BS voisines satisfaisant à la détermination au moyen d'identifiants ID des BS voisines.

**5.** Procédé selon la revendication 1, dans lequel le regénération du signal d'interférence regénéré par décodage comprend l'étape consistant à normaliser une métrique d'entrée d'un décodeur de canal au moyen d'une variance d'interférence/bruit correspondant au signal à décoder.

**6.** Procédé selon la revendication 5, comprenant, en outre, l'étape consistant à normaliser une métrique d'entrée d'un décodeur de canal au moyen d'une variance d'interférence/bruit du signal reçu en provenance de la BS de desserte, si les signaux d'interférence des BS voisines satisfaisant à la détermination sont tous annulés.

7. Appareil pour l'annulation d'un signal d'interférence de cellules voisines dans un récepteur destiné à recevoir un signal transmis par une station de base BS de desserte dans un système d'Accès Multiple par Répartition Orthogonale de la Fréquence OFDMA. l'appareil comprenant :

un contrôleur (1410, 1510) adapté pour effectuer une opération de commande pour détecter des signaux d'interférence parmi les signaux reçus en provenance d'au moins une BS d'une pluralité de BS voisines et d'une BS de desserte, mesurer l'intensité des signaux d'interférence détectés, et déterminer si l'intensité mesurée est supérieure à une valeur seuil, reclasser une liste de BS voisines satisfaisant à la détermination, dans l'ordre allant de la plus grande intensité à la plus petite intensité du signal d'interférence, sélectionner et détecter les signaux d'interférence dans l'ordre des BS voisines reclassées, calculer et normaliser une variance d'interférence/bruit pour l'un des signaux d'interférence détectés dans l'ordre des BS voisines reclassées, regénérer un signal d'interférence regénéré en décodant le signal d'interférence normalisé ou en exécutant une décision dure sur le signal d'interférence normalisé ; et soustraire le signal d'interférence regénéré du signal reçu,
un annulateur d'interférence (620, 720) pour regénérer le signal d'interférence regénéré sous la commande du contrôleur ;
un estimateur de variance d'interférence/bruit (1402, 1502) pour fournir la variance d'interférence/bruit sous la commande du contrôleur ;
un normaliseur (1404, 1504) pour normaliser une métrique d'entrée en fonction de la variance d'interférence/ bruit reçue de l'estimateur de variance d'interférence/bruit ; et
un soustracteur (602, 702) pour soustraire le signal d'interférence regénéré du signal reçu en provenance de la BS de desserte.

8. Appareil selon la revendication 7, dans lequel l'intensité des signaux d'interférence détectés comprend un rapport Porteuse sur Interférence plus Bruit (CINR).

9. Appareil selon la revendication 7, dans lequel l'intensité des signaux d'interférence détectés comprend une intensité de signal pilote.

10. Appareil selon la revendication 7, dans lequel le normaliseur est en outre adapté pour normaliser une métrique d'entrée d'un décodeur de canal au moyen d'une variance d'interférence/bruit du signal reçu en provenance de la BS de desserte, sous la commande du contrôleur, si les signaux d'interférence des BS voisines satisfaisant à la détermination sont tous annulés.

FIG.1

$d(n)$ → | CHANNEL INTERLEAVER | 201 → $w(n)$ → | SYMBOL MAPPER | 203 → $x(m)$ → | SYMBOL REPEATER | 205 → $s(l)$ → | ALLOCATOR | 207 → $s(k)$ → | SCRAMBLER | 209 → $q(k)s(k)$ → | IFFT | 211 → $x(i)$

200

FIG.2

$\underline{300}$

FIG.3

Time (OFDMA Symbol Number) (403)

Frequency (Subchanel) (401)

Preamble (411)

FCH (413)

DL-MAP (415)

DL-MAP

UL-MAP (417)

DL burst #3 (421)

DL burst #1 (423)

DL burst #4 (425)

DL burst #2 (419)

DL burst #5 (427)

Control Channel (431)

UL burst #1 (433)

UL burst #2 (435)

UL burst #3 (437)

UL burst #4 (439)

Down-link (410)

Up-link (430)

FIG.4

EP 1 793 507 B1

```
┌─────────────────────────┐
│    BS ID Acquisition     │──~ 501
└─────────────────────────┘
             │
             ▼
┌─────────────────────────┐
│      FCH decoding        │──~ 503
└─────────────────────────┘
             │
             ▼
┌─────────────────────────┐
│     DL-MAP decoding      │──~ 505
└─────────────────────────┘
             │
             ▼
┌─────────────────────────┐
│    DL burst decoding     │──~ 507
└─────────────────────────┘
```

FIG.5

FIG.6

EP 1 793 507 B1

FIG.7

FIG.8

EP 1 793 507 B1

FIG.9

FIG.10

FIG.10

FIG.11

EP 1 793 507 B1

1200

CONTROLLER — 1210

601 FFT

602

604

603 INTERFERENCE/NOISE VARIANCE ESTIMATOR — 1202

ICinfo

607 DEALLOCATOR

605 DE-SCRAMBLER

CHANNEL ESTIMATOR

609 CHANNEL COMPENSATOR

611 REPETITION COMBINER

613 SYMBOL DEMAPPER

1204 LLR NORMALIZER

615 CHANNEL DECODER

INTERFERENCE/NOISE VARIANCE INFORMATION

617 CHANNEL ENCODER

619 SYMBOL MAPPER

621 SYMBOL REPEATER

623 ALLOCATOR

625 SCRAMBLER

620

627

$y(k)$ $y'(k)$ $z(k)$ $c(k)$ $p(l)$ $c(l)$ $r(l)$ $|c(l)|^2$ $x(m)$ $c(m)$ $\Lambda(n)$ $\Lambda'(n)$ $s_i(l)$ $s_i(k)$ $\hat{y}_i(k)$

FIG.12

FIG.13

EP 1 793 507 B1

**1400**

**1410**

CONTROLLER

IC info

**1402** INTERFERENCE/ NOISE VARIANCE ESTIMATOR

INTERFERENCE/NOISE VARIANCE INFORMATION

$y'(k)$

**601** FFT

**602** $y(k)$

**603** DE-SCRAMBLER $z(k)$

**607** DEALLO-CATOR $p(l)$ $c(l)$

**1404** SYMBOL NORMALI-ZER $p'(l)$ $c'(l)$

**609** CHANNEL COMPEN-SATOR $r(l)$ $|c(l)|^2$

**611** REPETI-TION COMBINER $x(m)$ $c(m)$

**613** SYMBOL DEMAP-PER $\Lambda(n)$

**615** CHANNEL DECODER

**604**

**605** CHANNEL ESTIMATOR $c(k)$

$c(k)$

**620**

$\hat{y}_i(k)$

**627**

**625** SCRAMBLER $s_i(k)$

**623** ALLOCATOR $s_i(l)$

**621** SYMBOL REPEATER

**619** SYMBOL MAPPER

**617** CHANNEL ENCODER

FIG.14

FIG.15

EP 1 793 507 B1

36

START

SCAN NEIGHBOR BSs AND
ESTIMATE CINRs OF NEIGHBOR BSs — 1601

COMPARE CINR OF SERVING BS
WITH CINR OF NEIGHBOR BS — 1603

SELECT BS SATISFYING SPECIFIC
CONDITION AMONG NEIGHBOR BSs — 1605

SELECT BS HAVING HIGHEST CINR
AMONG SELECTED NEIGHBOR BSs — 1607

CALCULATE INTERFERENCE/NOISE
VARIANCE OF CORRESPONDING BS — 1609

NORMALIZE INTERFERENCE SIGNAL — 1611

DECODE SIGNAL OF CORRESPONDING BS — 1613

REGENERATE INTERFERENCE SIGNAL — 1615

SUBTRACT REGENERATED INTERFERENCE SIG-
NAL FROM SIGNAL RECEIVED FROM SERVING BS — 1617

1619
INTERFERENCE CANCELA-
TION COMPLETED?  NO

YES

CALCULATE INTERFERENCE/
NOISE VARIANCE OF SERVING BS — 1621

NORMALIZE SIGNAL FROM SERVING BS — 1623

DECODE SIGNAL RECEIVED FROM SERVING BS — 1625

END

FIG.16

START

SCAN NEIGHBOR BSs AND ESTIMATE CINRs OF NEIGHBOR BSs — 1701

COMPARE CINR OF SERVING BS WITH CINR OF NEIGHBOR BS — 1703

SELECT BS SATISFYING SPECIFIC CONDITION AMONG NEIGHBOR BSs — 1705

SELECT BS HAVING HIGHEST CINR AMONG SELECTED NEIGHBOR BSs — 1707

SLICE SIGNAL OF CORRESPONDING BS (HARD DECISION) — 1709

REGENERATE INTERFERENCE SIGNAL — 1711

SUBTRACT REGENERATED INTERFERENCE SIGNAL FROM SIGNAL RECEIVED FROM SERVING BS — 1713

1715
INTERFERENCE CANCELA-TION COMPLETED? — NO

YES

CALCULATE INTERFERENCE/ NOISE VARIANCE OF SERVING BS — 1717

NORMALIZE SIGNAL FROM SERVING BS — 1719

DECODE SIGNAL RECEIVED FROM SERVING BS — 1721

END

FIG.17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040131007 A1
- WO 0106664 A2
- WO 0141387 A1

**Non-patent literature cited in the description**

- **Y. XU ; H.-J. SU ; E. GERANIOTIS.** Pilot symbol assisted QAM with interleaved filtering and turbo decoding over Rayleigh flat-fading channel. *Proc. MICOM '99,* 86-91